# EUROPEAN PATENT APPLICATION

(11) **EP 4 799 879 A1**
(43) Date of publication of application: **02.09.2026**
(21) Application number: 26158183.9
(22) Date of filing: 12.02.2026
(51) Int. Cl.: B60R 25/24

(54) **VEHICLE AND MANAGEMENT SERVER**

(30) Priority: 28.02.2025 JP 2025031973
(71) Applicant: Toyota Jidosha Kabushiki Kaisha, Toyota-shi, Aichi-ken 471-8571 (JP)
(72) Inventor: KOBAYASHI, Junya, Toyota-shi, 471-8571 (JP); HOMMA, Hiroki, Toyota-shi, 471-8571 (JP); MATSUMOTO, Satoshi, Toyota-shi, 471-8571 (JP); MURASE, Junji, Ohguchi-cho, 480-0195 (JP); MORI, Yuki, Ohguchi-cho, 480-0195 (JP); HASEGAWA, Yosuke, Ohguchi-cho, 480-0195 (JP)
(74) Representative: J A Kemp LLP

(57) **Abstract**

A vehicle is configured to communicate with multiple devices registered as multiple digital keys by storing first information related to the digital keys. The vehicle includes a user interface, a storage device storing second information related to the digital keys, and processing circuitry. The processing circuitry is configured to, when receiving, via the user interface, a deletion operation for deleting a digital key to be deleted that is at least one of the digital keys, set a state of the digital key to be deleted to a phase-out state in which the digital key to be deleted is deleted when a prescribed condition is satisfied, and delete the second information related to the digital key to be deleted from the storage device when the prescribed condition is satisfied.

## Description

### BACKGROUND

### 1. Field

The present disclosure relates to a vehicle and a management server.

### 2. Description of Related Art

JP2023-184349A discloses a digital key management system that utilizes a device, such as a smartphone, as a key for a vehicle. The management system causes the vehicle and the device to store information related to a digital key. Accordingly, the vehicle can be used with the device registered as a digital key, without requiring a dedicated vehicle key.

When the information related to the digital key is deleted from the vehicle, any device storing the deleted digital key information loses its function as a digital key.

If a digital key stored in the vehicle is deleted by operation of a user interface provided in the vehicle, the user of the device storing information related to the deleted digital key can no longer use the device as a digital key. In other words, there is a risk that the user may suddenly be unable to use the vehicle due to deletion of the digital key by another person.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a vehicle is configured to communicate with multiple devices each storing first information related to multiple digital keys. The devices are registered as the digital keys in the vehicle. The vehicle includes a user interface configured to receive an operation from a user of the vehicle, a storage device storing second information related to the digital keys, and processing circuitry. The processing circuitry is configured to, when receiving a deletion operation via the user interface for deleting a digital key to be deleted that is at least one of the digital keys registered to the vehicle, set a state of the digital key to be deleted to a phase-out state in which the digital key to be deleted is deleted when a prescribed condition is satisfied, and delete the second information related to the digital key to be deleted from the storage device when the prescribed condition is satisfied.

In another general aspect, a vehicle is configured to communicate with a server that manages multiple digital keys and with multiple devices each storing first information related to the digital keys. The devices are registered as the digital keys in the vehicle. The vehicle includes a user interface configured to receive an operation from a user of the vehicle, a storage device storing second information related to the digital keys, and processing circuitry. The processing circuitry is configured to, when receiving a deletion operation via the user interface for deleting a digital key to be deleted that is at least one of the digital keys registered to the vehicle, transmit a deletion request to delete the digital key to be deleted to the server, and delete the second information related to the digital key to be deleted from the storage device when a prescribed condition is satisfied after receiving, from the server, a pending state notification indicating that a state of the digital key to be deleted has been set to a phase-out state in which the digital key to be deleted will be deleted when the prescribed condition is satisfied.

In a further general aspect, a management server is configured to communicate with multiple devices each storing first information related to multiple digital keys registered to a vehicle and with the vehicle storing second information related to the digital keys. The management server is configured to manage the digital keys. The management server includes a communication module and processing circuitry. The processing circuitry is configured to, when the communication module receives, from the vehicle, a deletion request to delete a digital key to be deleted that is at least one of the digital keys registered to the vehicle, set a state of the digital key to be deleted to a phase-out state in which the digital key to be deleted is deleted when a prescribed condition is satisfied, and delete the digital key to be deleted when the prescribed condition is satisfied.

Other features and aspects will be apparent from the following detailed description, the drawings, and the claims.

### BRIEF DESCRIPTION OF THE DRAWINGS

Fig. 1 is a schematic diagram showing a digital key management system according to a first embodiment.
Fig. 2 is a schematic diagram showing the management system shown in Fig. 1.
Fig. 3 is a schematic diagram showing owner key information stored in the owner device shown in Fig. 1.
Fig. 4 is a schematic diagram showing shareable key information stored in each of the shareable devices shown in Fig. 1.
Fig. 5 is a schematic diagram showing data in a database of the management server shown in Fig. 1.
Fig. 6 is a sequence diagram of an owner key registration process executed by the management system shown in Fig. 1.
Fig. 7 is a sequence diagram of a friend key registration process executed by the management system shown in Fig. 1.
Fig. 8 is a sequence diagram of a guest key registration process executed by the management system shown in Fig. 1.
Fig. 9 is a sequence diagram of a guest key deletion process executed by the management system shown in Fig. 1 based on a deletion reservation.
Fig. 10 is a sequence diagram of a process executed by the management system of Fig. 1 upon receiving a deletion operation.
Fig. 11 is a sequence diagram of the process executed by the management system of Fig. 1 upon receiving a deletion operation.
Fig. 12 is a flowchart showing a verification process executed by the vehicle shown in Fig. 1.
Fig. 13 is a schematic diagram showing a notification image displayed in the management system shown in Fig. 1.
Fig. 14 is a sequence diagram of the process executed by the management system of Fig. 1 upon receiving a deletion operation.
Fig. 15 is a sequence diagram of the process executed by the management system of Fig. 1 upon receiving a deletion operation.
Fig. 16 is a sequence diagram of the process executed by the management system of Fig. 1 upon receiving a deletion operation.
Fig. 17 is a sequence diagram of the process executed by the management system of Fig. 1 upon receiving a deletion operation.
Fig. 18 is a sequence diagram of a process executed by a management system according to a modification of the first embodiment upon receiving a deletion operation.
Fig. 19 is a sequence diagram of a process executed by a management system according to a second embodiment upon receiving a deletion operation.
Fig. 20 is a sequence diagram of the process executed by the management system according to the second embodiment upon receiving a deletion operation.
Fig. 21 is a sequence diagram of the process executed by the management system according to the second embodiment upon receiving a deletion operation.
Fig. 22 is a flowchart illustrating a verification process executed by the management system according to the second embodiment.
Fig. 23 is a sequence diagram of the process executed by the management system according to the second embodiment upon receiving a deletion operation.
Fig. 24 is a sequence diagram of the process executed by the management system according to the second embodiment upon receiving a deletion operation.
Fig. 25 is a sequence diagram of a process executed by a management system according to a modification of the second embodiment upon receiving a deletion request.
Fig. 26 is a sequence diagram of a process executed by a management system according to a third embodiment upon receiving a deletion operation.
Fig. 27 is a sequence diagram of the process executed by the management system according to the third embodiment upon receiving a deletion operation.
Fig. 28 is a sequence diagram of the process executed by the management system according to the third embodiment upon receiving a deletion operation.
Fig. 29 is a sequence diagram of the process executed by the management system according to the third embodiment upon receiving a deletion operation.
Fig. 30 is a sequence diagram of a process executed by a management system according to a modification of the third embodiment upon receiving a deletion request.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

A digital key management system including a vehicle 20 according to a first embodiment will now be described with reference to the drawings.

### Overview of Management System 10

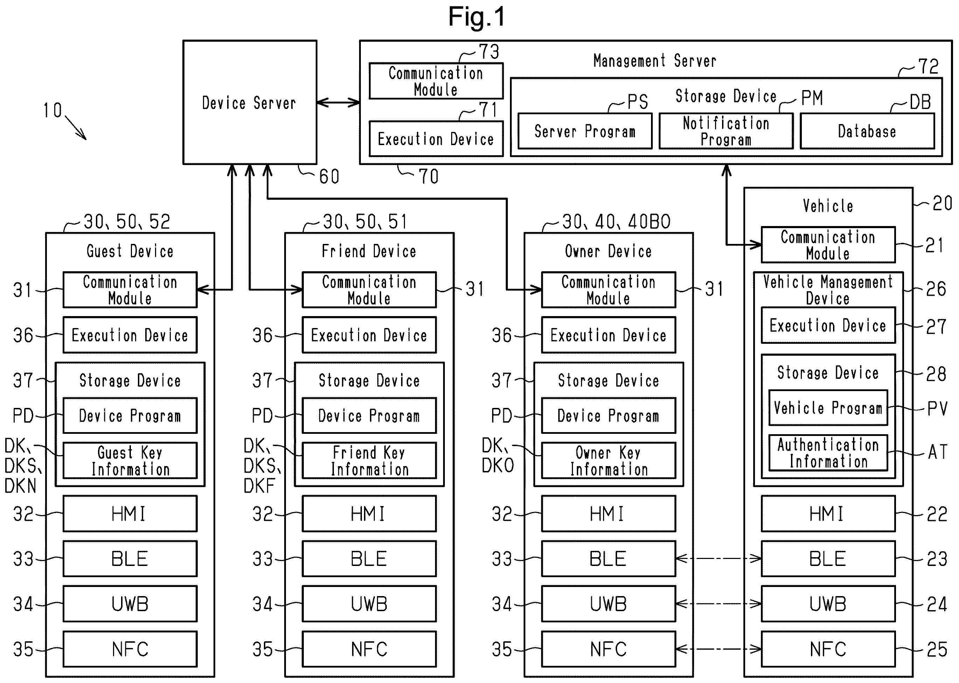

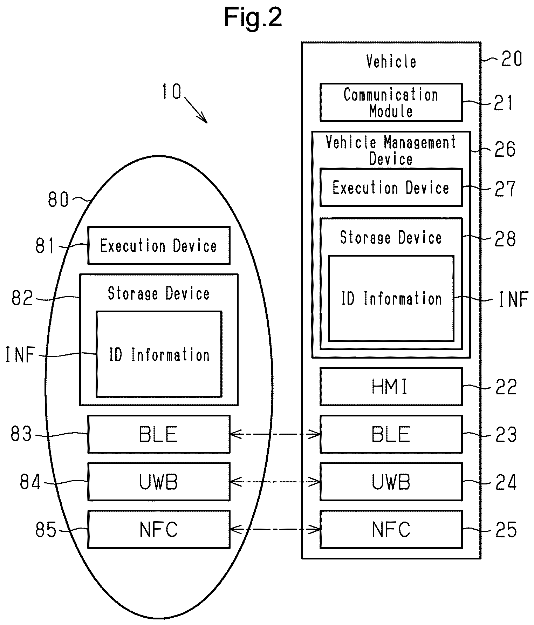

As shown in Fig. 1, a management system 10 manages information related to multiple digital keys that can be registered to the vehicle 20. Standards for digital keys have been established by the Car Connectivity Consortium (CCC). The digital key-related aspects in the present embodiment are based on compliance with the CCC standard. However, they are also applicable to standards and systems other than CCC standard. The management system 10 includes the vehicle 20, multiple devices 30, a device server 60, a management server 70, and a key fob 80 illustrated in Fig. 2.

As shown in Fig. 1, the vehicle 20 includes a communication module 21, a Human Machine Interface (HMI) 22, a Bluetooth Low Energy (BLE) module 23, an Ultra Wide Band (UWB) module 24, a Near Field Communication (NFC) module 25, and a vehicle management device 26. The HMI 22 functions as a user interface that receives operations by a user of the vehicle 20.

The communication module 21 communicates with the management server 70 through a wireless communication line. The HMI 22 includes an input device and an output device. When the input device receives an operation performed by a user of the vehicle 20, the input device inputs a signal indicating the operation to the vehicle 20. The output device is configured to present information to the user by images, sounds, or the like. The output device is, for example, a display and a speaker.

The BLE module 23 performs short-range wireless communication with the devices 30 via BLE communication. The UWB module 24 performs short-range wireless communication with the devices 30 via UWB communication. The UWB module 24 measures the distance between the devices 30 and the vehicle 20. The NFC module 25 performs short-range wireless communication with the devices 30 via NFC communication.

The vehicle management device 26 is mounted on the vehicle 20. The vehicle management device 26 manages the digital keys of the vehicle 20. The vehicle management device 26 is, for example, a digital key ECU. The vehicle management device 26 includes an execution device 27 and a storage device 28. The execution device 27 is processing circuitry including one or more processors that execute various processes according to computer programs (software). The storage device 28 stores a vehicle program PV and authentication information AT. The vehicle program PV causes the execution device 27 to store and delete the authentication information AT. The authentication information AT is information related to digital keys. Specifically, the authentication information AT is information for authenticating a digital key so that the vehicle 20 can be controlled using the digital key when the digital key is used. The authentication information AT is provided for each digital key to be authenticated. The execution device 27 includes a CPU. The execution device 27 executes the vehicle program PV to execute processes related to storage and deletion of the authentication information AT.

When the vehicle management device 26 authenticates the digital key, the vehicle management device 26 enables control of the vehicle 20 using the authenticated digital key. In an example, when the vehicle management device 26 authenticates a digital key, the vehicle management device 26 enables the authenticated digital key to unlock the vehicle 20. In another example, when the vehicle management device 26 authenticates a digital key, the vehicle management device 26 enables the authenticated digital key to start the vehicle 20.

The devices 30 are portable information terminals such as smartphones. Each device 30 includes a communication module 31, an HMI 32, a BLE module 33, a UWB module 34, an NFC module 35, an execution device 36, and a storage device 37.

The communication module 31 communicates with the device server 60 via a wireless communication line. The HMI 32 includes an input device and an output device. When the input device receives an operation performed by a user of the device 30, the input device inputs a signal indicating the operation to the device 30. The output device is configured to present information to the user by images, sounds, or the like. The output device is, for example, a display and a speaker.

The BLE module 33 performs short-range wireless communication with the vehicle 20 via BLE communication. The UWB module 34 performs short-range wireless communication with the vehicles 20 via UWB. The NFC module 35 performs short-range wireless communication with the vehicles 20 via NFC.

The storage device 37 stores a device program PD and key information DK. The device program PD is executed by the execution device 36 to cause the execution device 36 to store and delete the key information DK. The key information DK is information indicating a digital key.

The device program PD includes, for example, a device application and a digital key framework. The device application is an application for storing and deleting the key information DK. The digital key framework includes a program that provides the device 30 with a pairing functionality and a digital-key sharing functionality through an application program interface (API) prepared in an operating system (OS). The execution device 36 executes the device program PD to execute processes related to storage and deletion of the key information DK. The execution device 36 is processing circuitry including one or more processors that execute various processes according to computer programs (software).

The owner device 40 stores owner key information DKO indicating the owner key KO as the key information DK. The owner key KO is a digital key, and only one owner key KO is allowed to be registered to the vehicle 20. Therefore, there is only one owner key KO for one vehicle 20.

The vehicle 20 can also be operated through authentication of the key fob 80. The key fob 80 is a dedicated device that performs electronic authentication to unlock the vehicle 20.

As illustrated in Fig. 2, the key fob 80 includes an execution device 81, a storage device 82, a BLE module 83, a UWB module 84, and an NFC module 85. The execution device 81 controls operation of the key fob 80. The storage device 82 stores ID information INF. The ID information INF is, for example, an ID code unique to the key fob 80. The storage device 28 of the vehicle 20 also stores the ID information INF. The vehicle 20 acquires the ID information INF stored in the storage device 82 of the key fob 80 by performing short-range wireless communication with the key fob 80. Thereafter, the vehicle 20 determines whether the ID information INF acquired from the key fob 80 corresponds to the ID information INF stored in the storage device 28. When the ID information INF acquired from the key fob 80 corresponds to the ID information INF stored in the storage device 28, the vehicle 20 authenticates the key fob 80. When the key fob 80 is authenticated, the vehicle 20 is operable.

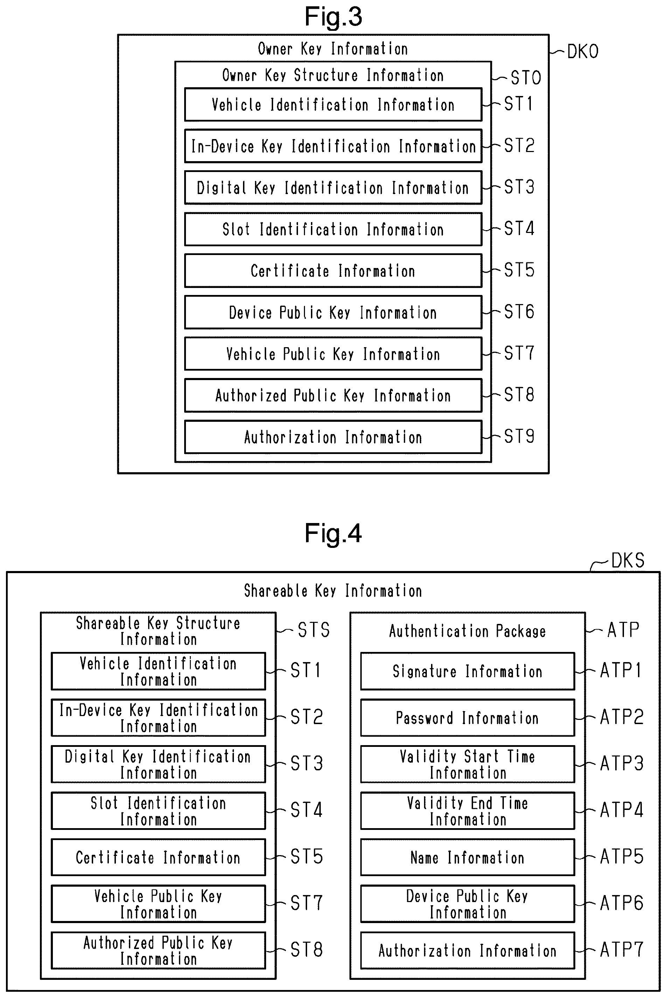

As shown in Fig. 3, the owner key information DKO includes owner key structure information STO. The owner key structure information STO includes vehicle identification information ST1, in-device key identification information ST2, digital key identification information ST3, and slot identification information ST4. The owner key structure information STO further includes certificate information ST5, device public key information ST6, vehicle public key information ST7, authorized public key information ST8, and authorization information ST9.

The vehicle identification information ST1 is information used to identify the vehicle 20 for which digital keys are assigned. For example, the vehicle identification information ST1 is the ID of the vehicle 20.

The in-device key identification information ST2 is used for management of digital keys in the device 30. The in-device key identification information ST2 is information that identifies the digital keys in the application of the device 30.

The digital key identification information ST3 is used for management of digital keys in the management server 70. The slot identification information ST4 is information that identifies digital keys locally within the devices 30.

The certificate information ST5 indicates a certificate that authenticates digital keys. The device public key information ST6 indicates a device public key PKD, which is a public key of the device 30. The device public key PKD in the owner key information DKO indicates the public key of the owner device 40. The vehicle public key information ST7 indicates a vehicle public key PKV, which is a public key of the vehicle 20. The authorized public key information ST8 indicates the vehicle public key PKV that has already been authorized. The authorization information ST9 is information indicating a range of functions that the device 30 storing the authorization information ST9 is permitted to perform. The range of functions permitted to be performed will be described below.

As shown in Fig. 1, the shareable devices 50 each store shareable key information DKS indicating a shareable key KS as the key information DK. The shareable keys KS are digital keys, and multiple shareable keys KS are allowed to be registered to a single vehicle 20. That is, multiple shareable keys KS may be associated with a single vehicle 20.

The shareable devices 50 include a friend device 51 and a guest device 52. The friend device 51 stores friend key information DKF indicating a friend key KF as the shareable key information DKS. The guest device 52 stores guest key information DKN indicating a guest key KN as the shareable key information DKS. The types of the shareable keys KS include a friend key KF and a guest key KN.

The friend key KF is a shareable key KS that has been registered based on a direct registration request D21 from the owner device 40, as described later. The registration request D21 is a request to store friend key information DKF, which is shareable key information DKS, in a device 30. That is, the registration request D21 is a request to store information related to new shareable key KS in another device 30.

The guest key KN is a shareable key KS that has been registered based on a registration request D31 from the friend device 51, as described later. The registration request D31 is a request to store the guest key information DKN, which is new shareable key information DKS, in a device 30. That is, the registration request D31 is a request to store information related to new shareable key KS in another device 30. The guest key KN is a shareable key KS registered based on a registration request from the shareable device 50 which is a device 30 different from the owner device 40.

A state in which the digital key is registered refers to a state in which the digital key is available for use. In a state in which a digital key is registered, the vehicle 20 stores the authentication information AT corresponding to the key information DK, and the device 30 stores the key information DK corresponding to the authentication information AT. Each of the authentication information AT and the key information DK is information related to the digital key. That is, in a state in which the digital key is registered, each of the vehicle 20 and the device 30 stores information related to the digital key. In a case in which the key information DK is information related to the shareable key KS, the authentication information AT corresponding to the key information DK is also information related to the shareable key KS.

As shown in Fig. 4, the shareable key information DKS includes shareable key structure information STS and an authentication package ATP. The shareable key structure information STS includes vehicle identification information ST1, in-device key identification information ST2, digital key identification information ST3, and slot identification information ST4. The shareable key structure information STS includes certificate information ST5, vehicle public key information ST7, and authorized public key information ST8. In other words, the shareable key structure information STS is information obtained by removing the device public key information ST6 and the authorization information ST9 from the owner key structure information STO.

The authentication package ATP includes signature information ATP1, password information ATP2, validity start time information ATP3, validity end time information ATP4, name information ATP5, device public key information ATP6, and authorization information ATP7.

The signature information ATP1 indicates that the shareable device 50 is an authorized entity for receiving the digital key. For example, in the sharable key information DKS stored in the friend device 51, the signature information ATP1 indicates a signature by the owner device 40. In other words, the signature information ATP1 indicates that the owner device 40 has signed the device public key PKD of the friend device 51 indicated by the device public key information ATP6. For example, in the sharable key information DKS stored in the guest device 52, the signature information ATP1 indicates a signature by the friend device 51. In other words, the signature information ATP1 indicates that the friend device 51 has signed the device public key PKD of the guest device 52 indicated by the device public key information ATP6.

The password information ATP2 indicates a pairing password PAS used to establish a secure channel during the pairing between the vehicle 20 and the owner device 40. The validity start time information ATP3 indicates the earliest date and time at which the shareable key KS becomes valid for use. The validity end time information ATP4 indicates the latest date and time until which the shareable key KS remains valid for use. The name information ATP5 indicates a name for identifying the shareable devices 50 storing the shareable key information DKS. The name information ATP5 is set to an identifiable name for each of the shareable devices 50, for example, by an operation from the owner device 40. The authorization information ATP7 is information indicating a range of functions that can be used when the device 30 storing the authorization information ATP7 is authenticated.

The range of functions that can be used is, for example, the number of shareable keys KS for which registration can be requested, the range of functions of the vehicle 20 that can be used by authentication of a digital key, or the like. For example, the number of friend keys KF that can be requested for registration by the owner device 40 is greater than the number of guest keys KN for which the friend device 51 is permitted to request registration.

The permitted range of functions of the vehicle 20 refers to the set of controllable functions, such as engine start control of the vehicle 20, power-on control of the vehicle 20, and door unlock and door lock control of the vehicle 20. For example, when the permitted range of functions of the vehicle 20 includes all three of the above functions, the permitted range of functions of the vehicle 20 is broader than when it includes only door unlock and door lock control of the vehicle 20. Specifically, the range of functions of the vehicle 20 that can be used by the friend device 51 is the three functions described above, whereas the range of functions of the vehicle 20 that can be used by the guest device 52 is power-on control of the vehicle 20 and door unlock and door lock control of the vehicle 20.

As shown in Fig. 1, the device server 60 relays communication between each device 30 and the management server 70. Fig. 1 illustrates only one device server 60. However, a separate device server 60 may be provided for each type of device 30. That is, a device server 60 used for communication with a first type of device 30 may differ from a device server 60 used for communication with a second type of device 30. For example, the type may refer to the model of a device 30, and a separate device server 60 may be provided for each model of the device 30. In another example, the type may refer to a communication line used by the device 30, and a separate device server 60 may be provided for each type of communication line.

Each device server 60 relays communication between the corresponding device 30 and the management server 70. Each type of device 30 is capable of communicating with the management server 70 via the corresponding device server 60.

### Management Server 70

The management server 70 manages digital keys. The management server 70 is capable of communicating with the vehicle 20 and multiple devices 30. The management server 70 includes an execution device 71, a storage device 72, and a communication module 73. The execution device 71 is processing circuitry including one or more processors that execute various processes according to computer programs (software). The communication module 73 communicates with the device server 60 via a wireless communication line. The communication module 73 is capable of wirelessly communicating with the communication module 21 of the vehicle 20.

The storage device 72 stores a server program PS and a database DB.

The server program PS causes the execution device 71 to register digital keys in the database DB and delete digital keys from the database DB.

The database DB includes information in which, for each of the digital keys, the corresponding vehicle 20 is associated with the registered devices 30. Data DA included in the database DB is partitioned by vehicle 20. In a state in which digital keys are registered, the management server 70 stores, as the data DA, information indicating devices 30 storing key information DK, which indicates the digital keys. The management server 70 manages the digital keys by storing information related to the digital keys as the data DA in the database DB.

### Data DA

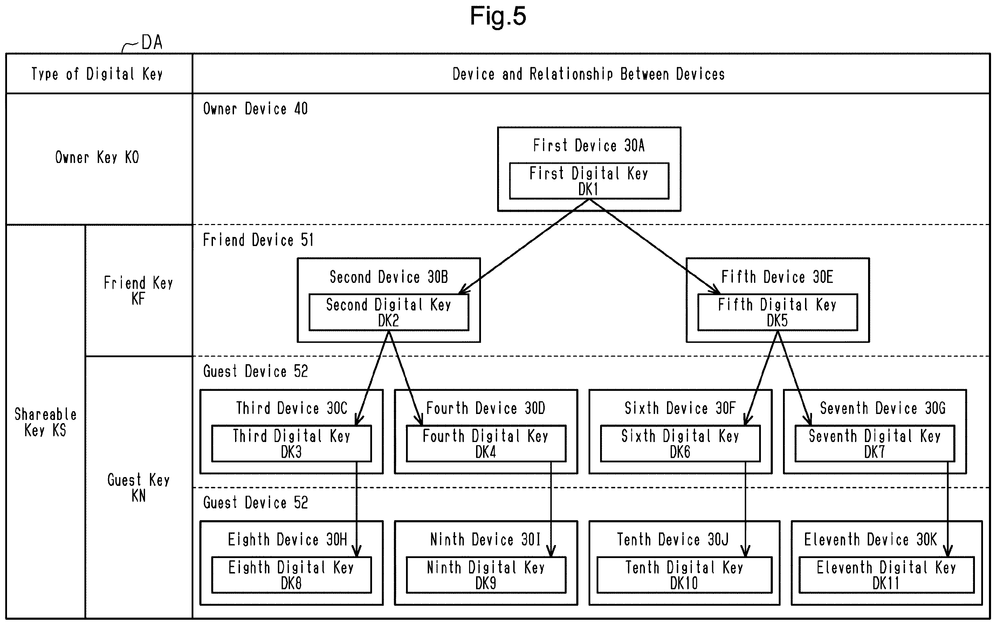

As shown in Fig. 5, the data DA of one vehicle 20 includes information related to the types of digital keys registered to the vehicle 20, the registered devices 30, and the relationship between the registered devices 30. The digital keys are categorized into multiple hierarchical levels according to their respective types. From highest to lowest in the hierarchy, the digital keys are ordered as the owner key KO, the friend key KF, and the guest key KN. Digital keys at higher hierarchical levels are assigned greater authority.

Authority includes, for example, the number of shareable keys KS that may be requested for registration, and the scope of control over the vehicle 20 enabled through authentication of the digital key. Digital keys at higher hierarchical levels are permitted to request registration of a greater number of shareable keys KS. Specifically, for example, the number of friend keys KF that an owner device 40 is permitted to request for registration is greater than the number of guest keys KN that a friend device 51 is permitted to request for registration.

Further, as the hierarchical level of a digital key increases, the controllable scope of control of the vehicle 20 also increases. The controllable scope of control of the vehicle 20 refers to the set of controllable functions, such as engine start control of the vehicle 20, power-on control of the vehicle 20, and door unlock and door lock control of the vehicle 20. For example, when the controllable scope of control the vehicle 20 includes all three of the above functions, the control scope is broader than when it includes only door unlock and door lock control. Specifically, the scope of control of the vehicle 20 that can be controlled by the friend key KF includes all three functions described above, whereas the scope of control of the vehicle that can be controlled by the temporary key KN is limited to only the door unlock and door lock control of the vehicle 20.

A state will now be described in which digital keys are registered to eleven devices 30 for one vehicle 20. The eleven devices 30 will be referred to as a first device 30A through an eleventh device 30K.

The digital key registered to the first device 30A is referred to as a first digital key DK1. The digital key registered to the second device 30B is referred to as a second digital key DK2. The digital key registered to the third device 30C is referred to as a third digital key DK3. The digital key registered to the fourth device 30D is referred to as a fourth digital key DK4. The digital key registered to the fifth device 30E is referred to as a fifth digital key DK5. The digital key registered to the sixth device 30F is referred to as a sixth digital key DK6. The digital key registered to the seventh device 30G is referred to as a seventh digital key DK7. The digital key registered to the eighth device 30H is referred to as an eighth digital key DK8. The digital key registered to the ninth device 301 is referred to as a ninth digital key DK9. The digital key registered to the tenth device 30J is referred to as a tenth digital key DK10. The digital key registered to the eleventh device 30K is referred to as an eleventh digital key DK11.

The device 30 in which the owner key KO is registered as a digital key is the first device 30A. In other words, the first device 30A is the owner device 40. That is, the first digital key DK1 is the owner key KO.

The devices 30 to which the shareable key KS is registered as digital keys are the second device 30B through the eleventh device 30K. In other words, the second device 30B through the eleventh device 30K are shareable devices 50. That is, the second digital key DK2 through the eleventh digital key DK11 are all shareable keys KS.

Specifically, the devices 30 to which the friend key KF is registered as the shareable key KS are the second device 30B and the fifth device 30E. In other words, the second device 30B and the fifth device 30E are friend devices 51.

The devices 30 to which the guest key KN is registered as the shareable key KS are the third device 30C, the fourth device 30D, and the sixth device 30F through the eleventh device 30K. In other words, the third device 30C, the fourth device 30D, and the sixth device 30F through the eleventh device 30K are the guest devices 52.

### Direct Lineage Relationship

The relationship between the registered devices 30 included in the data DA will now be described. The relationship between the second device 30B and the first device 30A is such that the friend key KF has been registered to the second device 30B in response to a registration request from the first device 30A. In other words, the second digital key DK2 is registered based on the first digital key DK1. In this case, the second digital key DK2 is a digital key that is one generation downstream in a direct lineage from the first digital key DK1.

The relationship between the fifth device 30E and the first device 30A is such that the friend key KF has been registered to the fifth device 30E in response to a registration request from the first device 30A. In other words, the fifth digital key DK5 is registered based on the first digital key DK1. In this case, the fifth digital key DK5 is a digital key that is one generation downstream in a direct lineage from the first digital key DK1.

The relationship between the third device 30C and the second device 30B is such that the guest key KN has been registered to the third device 30C in response to a registration request from the second device 30B. In other words, the third digital key DK3 is registered based on the second digital key DK2. In this case, the third digital key DK3 is a digital key that is one generation downstream in a direct lineage from the second digital key DK2. The third digital key DK3 is a digital key that is two generations downstream in a direct lineage from the first digital key DK1.

The relationship between the fourth device 30D and the second device 30B is such that the guest key KN has been registered to the fourth device 30D in response to the registration request from the second device 30B. In other words, the fourth digital key DK4 is registered based on the second digital key DK2. In this case, the fourth digital key DK4 is a digital key that is one generation downstream in a direct lineage from the second digital key DK2. The fourth digital key DK4 is a digital key that is two generations downstream in a direct lineage from the first digital key DK1.

The relationship between the sixth device 30F and the fifth device 30E is such that the guest key KN has been registered to the sixth device 30F in response to a registration request from the fifth device 30E. In other words, the sixth digital key DK6 is registered based on the fifth digital key DK5. In this case, the sixth digital key DK6 is a digital key that is one generation downstream in a direct lineage from the fifth digital key DK5. The sixth digital key DK6 is a digital key that is two generations downstream in a direct lineage from the first digital key DK1.

The relationship between the seventh device 30G and the fifth device 30E is such that the guest key KN has been registered to the seventh device 30G in response to a registration request from the fifth device 30E. In other words, the seventh digital key DK7 is registered based on the fifth digital key DK5. In this case, the seventh digital key DK7 is a digital key that is one generation downstream in a direct lineage from the fifth digital key DK5. The seventh digital key DK7 is a digital key that is two generations downstream in a direct lineage from the first digital key DK1.

The relationship between the eighth device 30H and the third device 30C is such that the guest key KN has been registered to the eighth device 30H in response to a registration request from the third device 30C. In other words, the eighth digital key DK8 is registered based on the third digital key DK3. In this case, the eighth digital key DK8 is a digital key that is one generation downstream in a direct lineage from the third digital key DK3. The eighth digital key DK8 is a digital key that is two generations downstream in a direct lineage from the second digital key DK2. The eighth digital key DK8 is a digital key that is three generations downstream in a direct lineage from the first digital key DK1.

The relationship between the ninth device 301 and the fourth device 30D is such that the guest key KN has been registered to the ninth device 30I in response to a registration request from the fourth device 30D. In other words, the ninth digital key DK9 is registered based on the fourth digital key DK4. In this case, the ninth digital key DK9 is a digital key that is one generation downstream in a direct lineage from the fourth digital key DK4. The ninth digital key DK9 is a digital key that is two generations downstream in a direct lineage from the second digital key DK2. The ninth digital key DK9 is a digital key that is three generations downstream in a direct lineage from the first digital key DK1.

The relationship between the tenth device 30J and the sixth device 30F is such that the guest key KN has been registered to the tenth device 30J in response to a registration request from the sixth device 30F. In other words, the tenth digital key DK10 is registered based on the sixth digital key DK6. In this case, the tenth digital key DK10 is a digital key that is one generation downstream in a direct lineage from the sixth digital key DK6. The tenth digital key DK10 is a digital key that is two generations downstream in a direct lineage from the fifth digital key DK5. The tenth digital key DK10 is a digital key that is three generations downstream in a direct lineage from the first digital key DK1.

The relationship between the eleventh device 30K and the seventh device 30G is such that the guest key KN has been registered to the eleventh device 30K in response to a registration request from the seventh device 30G. In other words, the eleventh digital key DK11 is registered based on the seventh digital key DK7. In this case, the eleventh digital key DK11 is a digital key that is one generation downstream in a direct lineage from the seventh digital key DK7. The eleventh digital key DK11 is a digital key that is two generations downstream in a direct lineage from the fifth digital key DK5. The eleventh digital key DK11 is a digital key that is three generations downstream in a direct lineage from the first digital key DK1.

As described above, the data DA includes information related to the devices 30 to which the digital keys have been registered. In the data DA, each registered device 30 is associated with information indicating the device 30 that initiated the registration request. The data DA also includes information indicating the digital key on which the registration of each digital key is based.

Digital keys that have been registered in response to a request from the first digital key DK1 and digital keys that are one or more generations downstream from those digital keys are all digital keys in a direct lineage from the first digital key DK1. That is, in the relational diagram shown in Fig. 5, the digital keys other than the first digital key DK1 are each a digital key that is one or more generations downstream in a direct lineage from the first digital key DK1.

Digital keys that have been registered in response to a request from the second digital key DK2 and digital keys that are one or more generations downstream from those digital keys are all digital keys in a direct lineage from the second digital key DK2. That is, in the relational diagram shown in Fig. 5, the third digital key DK3, the fourth digital key DK4, the eighth digital key DK8, and the ninth digital key DK9 are each a digital key that is one or more generations downstream in a direct lineage from the second digital key DK2.

### Higher-Level and Lower-Level Digital Keys

The first digital key DK1 is a higher-level digital key than a digital key registered in response to a request from the first digital key DK1 and any digital key that is one or more generations subsequent to that digital key. That is, in the data DA illustrated in Fig. 5, the first digital key DK1 is a higher-level digital key than all digital keys other than the first digital key DK1.

The digital key registered in response to a request from the first digital key DK1 is a higher-level digital key than any digital key that is one or more generations subsequent to that digital key. That is, in the data DA illustrated in Fig. 5, the second digital key DK2 and the fifth digital key DK5 are each a higher-level digital key than a digital key registered in response to a request from the second digital key DK2 or the fifth digital key DK5, and any digital key that is one or more generations subsequent to that digital key. In other words, the second digital key DK2 and the fifth digital key DK5 are higher-level digital keys than the third digital key DK3, the fourth digital key DK4, and the sixth digital key DK6 through the eleventh digital key DK11.

A digital key that is one generation subsequent to a digital key registered in response to a request from the first digital key DK1 is a higher-level digital key than a digital key that is two or more generations subsequent to the registered digital key. That is, in the data DA illustrated in Fig. 5, the third digital key DK3 is a higher-level digital key than a digital key registered in response to a request from the third digital key DK3, the fourth digital key DK4, the sixth digital key DK6, or the seventh digital key DK7. The same applies to the fourth digital key DK4, the sixth digital key DK6, and the seventh digital key DK7. In other words, the third digital key DK3, the fourth digital key DK4, the sixth digital key DK6, and the seventh digital key DK7 are higher-level digital keys than the eighth digital key DK8 through the eleventh digital key DK11.

For example, in the data DA illustrated in Fig. 5, the digital keys in a direct lineage from the third digital key DK3 are the first digital key DK1, the second digital key DK2, and the eighth digital key DK8. For example, in the data DA illustrated in Fig. 5, the digital keys that are higher in level than the third digital key DK3 are the first digital key DK1, the second digital key DK2, and the fifth digital key DK5. For example, in the data DA illustrated in Fig. 5, the digital keys that are in a direct lineage with, and higher in level than, the third digital key DK3 are the first digital key DK1 and the second digital key DK2.

### Registration of Digital Keys

Next, a series of registration processes for registering digital keys in the management system 10 will be described. Registration of digital keys includes registration of an owner key KO, registration of a friend key KF, and registration of a guest key KN. The following description explains the overall process from a state in which no digital key is registered to a state in which digital keys are registered. In the following description, processes executed by the execution device 27 will be described as processes executed by the vehicle 20, processes executed by the execution device 36 will be described as processes executed by the device 30, and processes executed by the execution device 71 will be described as processes executed by the management server 70.

### Registration of the Owner Key

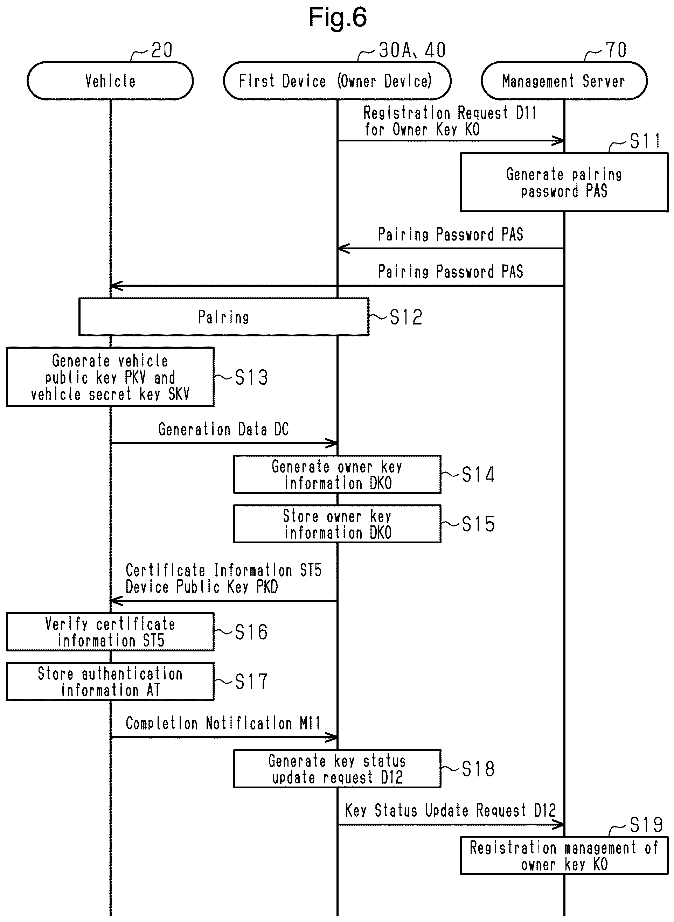

As shown in Fig. 6, the management system 10 executes a series of processes in order to register the owner key KO of the vehicle 20. The following describes an example of registering the owner key KO to the first device 30A, which does not store the key information DK that indicates the owner key KO.

In the management system 10, when registering the owner key KO, the owner key information DKO, which is key information DK indicating the owner key KO of the vehicle 20, is stored in the first device 30A. In the management system 10, when registering the owner key KO, authentication information AT for authenticating the owner key KO is stored in the vehicle 20. When the owner key KO is authenticated by the vehicle 20 and the owner key KO is registered to the management server 70, the vehicle 20 can be controlled using the owner key KO. Prior to the registration of the owner key KO, an application required for the registration is pre-installed on the first device 30A.

Upon receiving a registration request D11 for the owner key KO from the first device 30A, the management server 70 executes the process of step S11. In step S11, the management server 70 generates a pairing password PAS. The management server 70 then transmits information indicating the pairing password PAS to the vehicle 20 and the first device 30A.

After receiving the pairing password PAS, the vehicle 20 is set to a pairing mode via the HMI 22. The vehicle 20 then advances the process to step S12 while standing by in a state in which the vehicle 20 can receive a password from the first device 30A.

In step S12, the vehicle 20 performs pairing with the first device 30A. During the pairing process, the vehicle 20 establishes a secure channel for data transmission between the vehicle 20 and the first device 30A. The pairing process is performed using the pairing password PAS sent from the management server 70 to the vehicle 20 and the first device 30A. When the pairing process is successfully completed, the vehicle 20 proceeds to step S13.

In step S13, the vehicle 20 generates a vehicle public key PKV, which is a public key of the vehicle 20, and a vehicle secret key SKV, which is a secret key of the vehicle 20. Thereafter, the vehicle 20 transmits generation data DC for generating the owner key KO to the first device 30A via the secure channel. The generation data DC includes the vehicle identification information ST1 and the vehicle public key information ST7 indicating the vehicle public key PKV. Upon receiving the generation data DC, the first device 30A advances the process to step S14.

In step S14, the first device 30A generates owner key information DKO indicating the owner key KO. Thereafter, the first device 30A advances the process to step S15.

In step S15, the first device 30A stores the owner key information DKO. As a result, the first device 30A becomes the owner device 40. Subsequently, the first device 30A transmits, to the vehicle 20, the certificate information ST5 related to the owner key KO and the device public key information ST6 indicating the device public key PKD.

Upon receiving the certificate information ST5 and the device public key information ST6, the vehicle 20 executes the process of step S16. In step S16, the vehicle 20 verifies the certificate information ST5. When the verification of the certificate information ST5 is completed, the vehicle 20 advances the process to step S17.

In step S17, the vehicle 20 stores the device public key information ST6 indicating the device public key PKD in the storage device 28 as the authentication information AT. Subsequently, the vehicle 20 transmits a completion notification M11 to the first device 30A, indicating that the storage of the authentication data AT has been completed.

Upon receiving the completion notification M11, the first device 30A executes the process of step S18. In step S18, the first device 30A generates a key status update request D12 for the owner key KO. The key status update request D12 is a signal for requesting that the management server 70 update the database DB. The first device 30A transmits the key status update request D12 for the owner key KO to the management server 70 via the device server 60.

Upon receiving the key status update request D12, the management server 70 executes the process of step S19. In step S19, the management server 70 performs registration management of the owner key KO. Specifically, the management server 70 stores the fact that the device 30 to which the owner key KO is registered is the first device 30A as the data DA of the vehicle 20 in the database DB. As a result, the management system 10 terminates the series of processes for registering the owner key KO of the vehicle 20 to the first device 30A.

### Registration of Friend Key

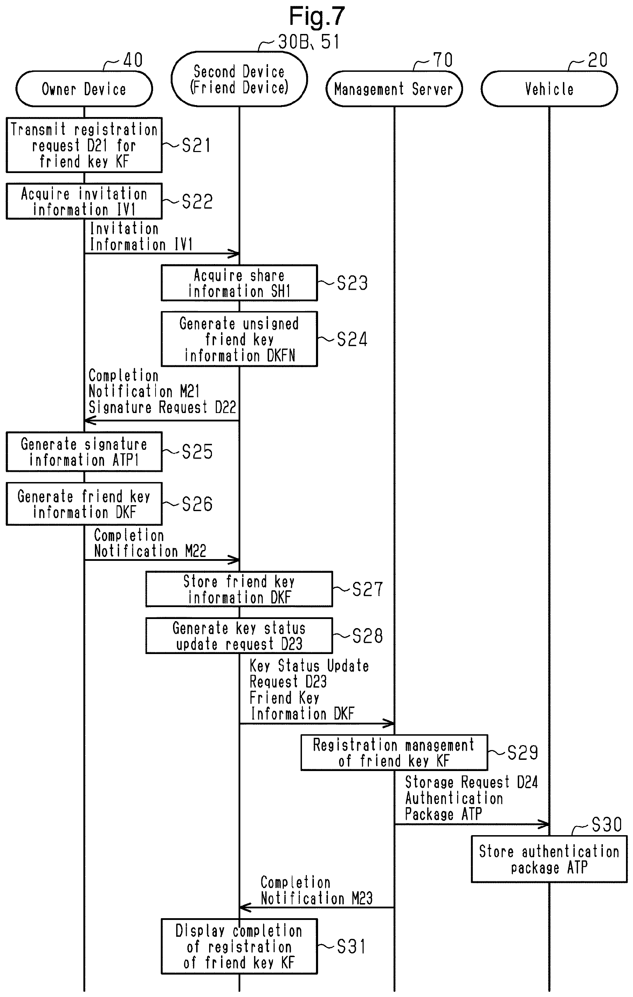

As shown in Fig. 7, the management system 10 executes a series of registration processes in order to register a friend key KF. The following describes an example of registering a friend key KF to the second device 30B, which does not store the friend key information DKF, through this series of processes.

When an operation for requesting the registration of the friend key KF is performed on the owner device 40, the owner device 40 first executes the process of step S21. In step S21, the owner device 40 transmits a registration request D21 for the friend key KF to a relay server (not shown). Thereafter, the owner device 40 advances the process to step S22.

In step S22, the owner device 40 acquires invitation information IV1 for sharing a digital key from the relay server. The invitation information IV1 is, for example, a URL link. The URL link contains share information SH1 necessary to share the digital key. Thereafter, the owner device 40 transmits the invitation information IV1 to the second device 30B.

Upon receiving the invitation information IV1, the second device 30B executes the process of step S23. In step S23, the second device 30B acquires the share information SH1 based on the invitation information IV1. Specifically, the second device 30B downloads the share information SH1 from the source of the URL link.

The share information SH1 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the owner device 40. Thereafter, the second device 30B advances the process to step S24.

In step S24, the second device 30B generates unsigned friend key information DKFN by using the share information SH1. The unsigned friend key information DKFN is friend key information DKF that does not have the signature information ATP1. The second device 30B uploads the generated unsigned friend key information DKFN to the URL link, which is the invitation information IV1. Thereafter, the second device 30B transmits a completion notification M21 to the owner device 40, indicating that the upload of the generated unsigned friend key information DKFN to the URL link has been completed. The second device 30B also transmits a signature request D22 to the owner device 40.

The owner device 40 receives the completion notification M21 and the signature request D22 from the second device 30B. Upon receiving the completion notification M21, the owner device 40 acquires the unsigned friend key information DKFN. Upon receiving the signature request D22, the owner device 40 executes the process of step S25.

In step S25, the owner device 40 generates the signature information ATP1. Specifically, the owner device 40 causes the HMI 32 to present the unsigned friend key information DKFN that has been acquired, and receives an operation indicating that the user of the owner device 40 has agreed to the registration of the friend key KF. Upon receiving the operation by the user, the owner device 40 generates the signature information ATP1 based on the operation. The owner device 40 then advances the process to step S26.

In step S26, the owner device 40 generates the friend key information DKF by adding the signature information ATP1 to the unsigned friend key information DKFN. The owner device 40 uploads the generated friend key information DKF to the URL link, which is the invitation information IV1. The owner device 40 transmits, to the second device 30B, a completion notification M22 indicating that uploading of the completed friend key information DKF to the URL link has been completed.

Upon receiving the completion notification M22, the second device 30B executes the process of step S27. In step S27, the second device 30B downloads and stores the friend key information DKF. As a result, the second device 30B is configured as the friend device 51. Thereafter, the second device 30B advances the process to step S28.

In step S28, the second device 30B generates a key status update request D23 for the friend key KF. The second device 30B transmits, to the management server 70, the friend key information DKF and the key status update request D23 for the friend key KF.

Upon receiving the key status update request D23 for the friend key KF, the management server 70 executes the process of step S29. In step S29, the management server 70 performs registration management of the friend key KF.

Specifically, the management server 70 verifies that the friend key KF, which is the subject of the key status update request D23, is not listed in a revocation list. The revocation list is a list indicating shareable keys KS, including friend keys KF and guest keys KN, for which deletion requests have already been received. If the friend key KF is listed in the revocation list, the management server 70 transmits a notification to the second device 30B indicating that it cannot respond to the key status update request D23.

On the other hand, in a case in which the friend key KF, which is the subject of the received key status update request D23, is not listed in the revocation list, the management server 70 registers information of the friend key KF in the database DB. The management server 70 stores, in the database DB, the friend key information DKF of the friend key KF that is the subject of the key status update request D23. The management server 70 stores, in the database DB, information indicating that the device 30 configured as the friend device 51 is the second device 30B. The management server 70 stores information indicating the relationship between the second device 30B and the owner device 40 by referencing the acquired friend key information DKF. Specifically, the management server 70 stores the fact that the second device 30B is the device 30 having the friend key KF registered in response to the registration request D21 from the owner device 40.

Subsequently, the management server 70 transmits, to the vehicle 20, the authentication package ATP, which is part of the friend key information DKF, along with a storage request D24, which requests storage of the authentication package ATP. That is, the management server 70 transmits the device public key information ST6, which indicates the device public key PKD of the friend device 51, to the vehicle 20. The management server 70 notifies the vehicle 20 that the device public key PKD has been signed by the owner device 40.

Upon receiving the storage request D24 and the authentication package ATP from the management server 70, the vehicle 20 executes the process of step S30. In step S30, the vehicle 20 stores the received authentication package ATP as the authentication information AT for authenticating the friend key KF.

After completing the registration management, the management server 70 transmits a completion notification M23 of the key status update to the second device 30B.

Upon receiving the completion notification M23 of the key status update, the second device 30B executes the process of step S31. In the process of step S31, the second device 30B presents information indicating the completion of the registration of the friend key KF on the HMI 32. For example, the second device 30B displays an image indicating the completion of the registration of the friend key KF on the HMI 32. As a result, the management system 10 terminates the series of processes for registering the friend key KF.

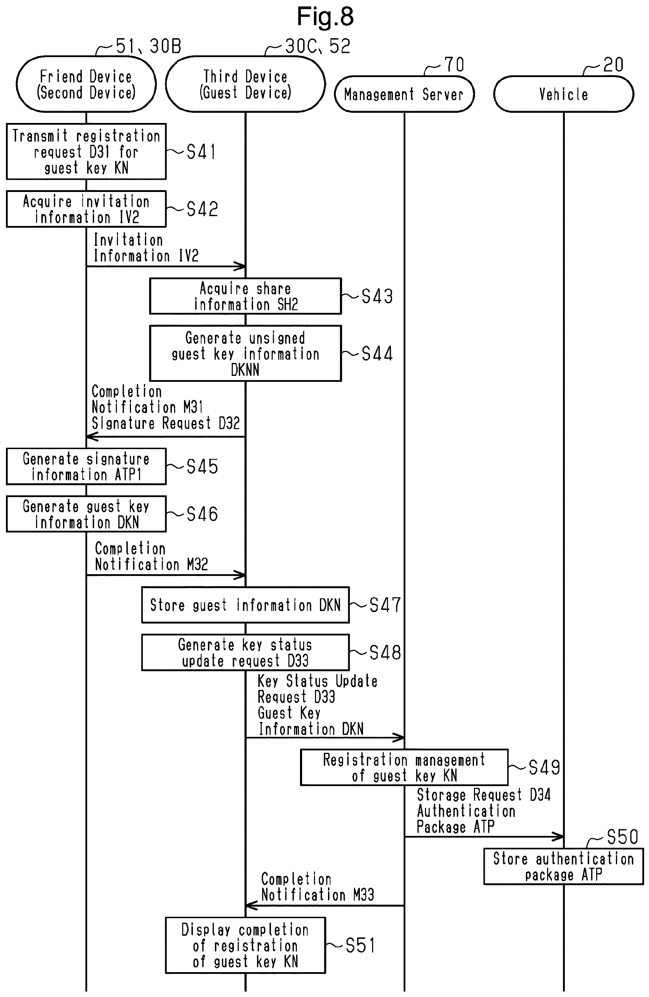

As shown in Fig. 8, the management system 10 executes a series of registration processes in order to register the guest key KN. An example in which the guest key KN is registered to the third device 30C that does not store the guest key information DKN will be described below.

When an operation for requesting the registration of the guest key KN is performed on the friend device 51, the friend device 51 executes the process of step S41. In step S41, the friend device 51 transmits a registration request D31 for the guest key KN to the relay server (not shown). Thereafter, the friend device 51 advances the process to step S42.

In step S42, the friend device 51 acquires invitation information IV2 for sharing a digital key from the relay server. The invitation information IV2 is, for example, a URL link. The URL link contains share information SH2 necessary to share the digital key. The friend device 51 transmits the invitation information IV2 to the third device 30C.

Upon receiving the invitation information IV2, the third device 30C executes the process of step S43. In step S43, the third device 30C acquires the share information SH2 based on the invitation information IV2. Specifically, the second device 30B downloads the share information SH2 from the URL link.

The share information SH2 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the friend device 51. Thereafter, the third device 30C advances the process to step S44.

In step S44, the third device 30C generates unsigned guest key information DKNN using the share information SH2. The unsigned guest key information DKNN is guest key information DKN that does not have the signature information ATP1. The third device 30C uploads the generated unsigned friend key information DKNN to the URL link, which is the invitation information IV2. Subsequently, the third device 30C transmits a completion notification M31 to the friend device 51, indicating that the upload of the generated unsigned guest key information DKNN to the URL link has been completed. The third device 30C also transmits a signature request D32 to the friend device 51.

The friend device 51 receives the completion notification M31 and the signature request D32 from the third device 30C. Upon receiving the completion notification M31, the friend device 51 acquires the unsigned guest key information DKNN. When receiving the signature request D32, the friend device 51 executes the process of step S45.

In step S45, the friend device 51 generates the signature information ATP1. Specifically, the friend device 51 causes the HMI 32 to present the unsigned guest key information DKNN that has been acquired, and receives an operation indicating that the user of the friend device 51 has agreed to the registration of the guest key KN. Upon receiving the operation by the user, the friend device 51 generates the signature information ATP1 based on the operation. Thereafter, the friend device 51 advances the process to step S46.

In step S46, the friend device 51 adds the signature information ATP1 to the unsigned guest key information DKNN to generate the guest information DKN. The friend device 51 uploads the generated guest key information DKN to the URL link, which is the invitation information IV2. The friend device 51 transmits, to the third device 30C, a completion notification M32 indicating that uploading of the generated guest key information DKN to the URL link has been completed.

Upon receiving the completion notification M32, the third device 30C executes the process of step S47. In step S47, the third device 30C downloads and stores the guest key information DKN. As a result, the third device 30C is configured as the guest device 52. Thereafter, the third device 30C advances the process to step S48.

In step S48, the third device 30C generates a key status update request D33 for the guest key KN. The third device 30C transmits the guest key information DKN and the key status update request D33 for the guest key KN to the management server 70.

Upon receiving the key status update request D33 for the guest key KN, the management server 70 executes the process of step S49. In step S49, the management server 70 performs registration management of the guest key KN.

Specifically, the management server 70 verifies that the guest key KN, which is the subject of the key status update request D33, is not listed in the revocation list. If the guest key KN is listed in the revocation list, the management server 70 transmits a notification to the third device 30C indicating that it cannot respond to the key status update request D33.

On the other hand, in a case in which the guest key KN is not listed in the revocation list, the management server 70 registers the guest key KN, which is the subject of the key status update request D33, to the database DB. The management server 70 stores the guest key information DNK of the guest key KF, which is the subject of the key status update request D33, in the database DB. The management server 70 stores, in the database DB, information indicating that the device 30 configured as the guest device 52 is the third device 30C. The management server 70 stores information indicating the relationship between the third device 30C and the friend device 51 by referencing the acquired guest key information DKN. Specifically, the management server 70 stores the fact that the third device 30C is the device 30 having the guest key KN registered in response to the registration request D31 from the friend device 51.

Subsequently, the management server 70 transmits, to the vehicle 20, the authentication package ATP, which is part of the guest key information DKN, along with a storage request D34, which requests the storage of the authentication package ATP. That is, the management server 70 transmits the device public key information ST6, which indicates the device public key PKD of the guest device 52, to the vehicle 20. The management server 70 notifies the vehicle 20 that the device public key PKD has been signed by the friend device 51.

Upon receiving the authentication package ATP and the storage request D34, the vehicle 20 executes the process of step S50. In step S50, the vehicle 20 stores the received authentication package ATP. The authentication package ATP is the authentication information AT for authenticating the guest key KN.

After completing the registration management, the management server 70 transmits a completion notification M33 of the key status update to the second device 30B.

Upon receiving the completion notification M33 of the key status update, the second device 30B executes the process of step S51. In the process of step S51, the third device 30C presents information indicating completion of the registration of the guest key KN on the HMI 32. For example, the third device 30C displays an image indicating the completion of the registration of the guest key KN on the HMI 32. As a result, the management system 10 terminates the series of processes for registering the guest key KN.

### Deletion of the Guest Key KN by Deletion Reservation D41 from the Friend Device 51

Next, a series of processes for deleting the guest key KN in the management system 10 will be described. The following describes the overall process from a state in which the guest key KN key is registered to a state in which the guest key KN is no longer registered.

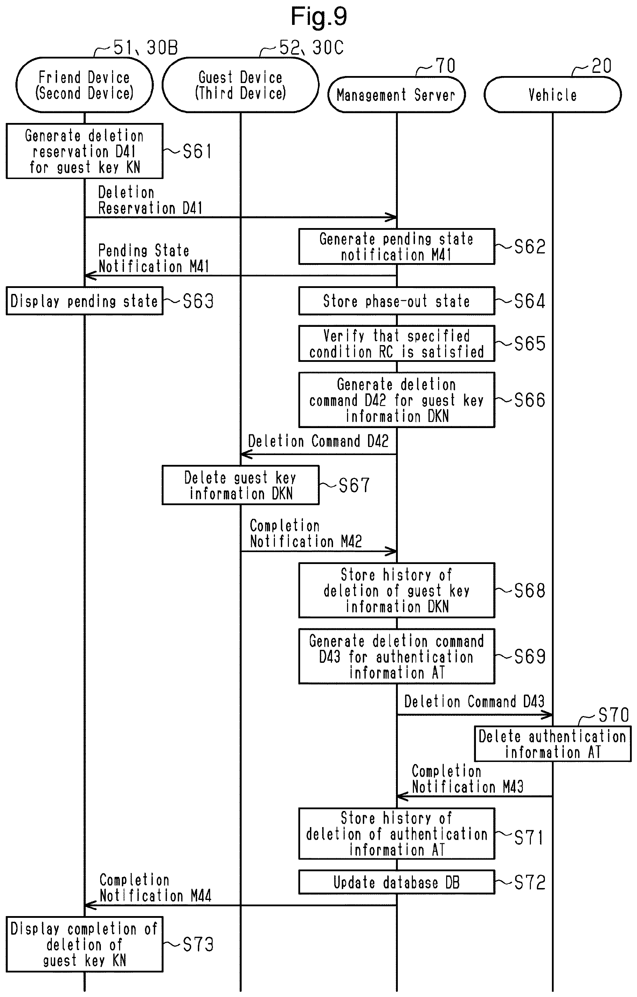

As shown in Fig. 9, the management system 10 executes a series of processes for deleting the guest key KN based on a deletion reservation D41 from the second device 30B, which is the friend device 51.

When an operation for requesting deletion of the guest key KN is performed on the friend device 51, the friend device 51 executes the process of step S61. In step S61, the friend device 51 generates the deletion reservation D41 for the guest key KN. The deletion reservation D41 is a signal for reserving deletion of the guest key KN.

The deletion reservation D41 includes a signal requesting deletion of the guest key KN, digital key identification information ST3 indicating the guest key KN, and information indicating a prescribed condition RC. The prescribed condition RC is a condition required for the management server 70 to start deletion of the target digital key after receiving the deletion reservation D41. The prescribed condition RC is determined in advance. The deletion reservation D41 includes name information ATP5, which is information for identifying the friend device 51 that transmits the deletion reservation D41 to the management server 70. The friend device 51 transmits the deletion reservation D41 for the guest key KN to the management server 70.

Upon receiving the deletion reservation D41 for the guest key KN, the management server 70 executes the process of step S62. In step S62, the management server 70 generates a pending state notification M41, which indicates that the deletion of the guest key KN is pending, based on the deletion reservation D41. The management server 70 transmits the pending state notification M41 to the friend device 51.

Upon receiving the pending state notification M41, the friend device 51 executes the process of step S63. In step S63, the friend device 51 causes the HMI 32 to present information indicating that deletion of the guest key KN, which is the subject of the deletion reservation D41, is pending.

After the process of step S62, the management server 70 executes the process of step S64. In step S64, the management server 70 stores the state of the guest key KN, which is the subject of the deletion reservation D41, in the database DB as being in a pending deletion state. The phase-out state is a state in which the deletion reservation D41 for a digital key has been received, but the execution of the deletion is still suspended. Thereafter, the management server 70 advances the process to step S65.

In step S65, the management server 70 verifies that the prescribed condition RC is satisfied. Upon verifying that the prescribed condition RC is satisfied, the management server 70 advances the process to step S66.

In step S66, the management server 70 generates a deletion command D42 for instructing execution of deletion of the guest key information DKN indicating the guest key KN for which the deletion reservation D41 has been made. The management server 70 transmits the deletion command D42 to the third device 30C, which is a guest device 52.

Upon receiving the deletion command D42, the guest device 52 executes the process of step S67. In step S67, the guest device 52 deletes the guest key information DKN in accordance with the deletion command D42. The guest device 52 transmits, to the management server 70, a deletion completion notification M42 indicating that deletion of the guest key information DKN in accordance with the deletion command D42 has been completed.

Upon receiving the completion notification M42, the management server 70 executes the process of step S68. In step S68, the management server 70 stores information indicating that the guest key information DKN has been deleted from the guest device 52. Thereafter, the management server 70 advances the process to step S69.

In step S69, the management server 70 generates a deletion command D43 for the authentication information AT. The deletion command D43 for the authentication information AT is a request to delete the authentication information AT for authenticating the guest key KN that is the subject of the deletion reservation D41. The management server 70 transmits the deletion command D43 to the vehicle 20.

Upon receiving the deletion command D43, the vehicle 20 executes the process of step S70. In step S70, in accordance with the deletion command D43, the vehicle 20 deletes the authentication information AT for authenticating the guest key KN, which is the subject of the deletion reservation D41. That is, the vehicle 20 deletes the authentication package ATP of the guest key KN. Thereafter, the vehicle 20 transmits, to the management server 70, a completion notification M43 indicating that the deletion of the authentication information AT in accordance with the deletion command D43 has been completed.

Upon receiving the completion notification M43, the management server 70 executes the process of step S71. In step S71, the management server 70 stores information of deletion of the authentication information AT for authenticating the guest key KN to be deleted in the currently executed series of deletion processes from the vehicle 20. Thereafter, the management server 70 advances the process to step S72.

In step S72, the management server 70 updates the database DB. Specifically, the management server 70 deletes information related to the guest device 52 that has the guest key KN to be deleted in the currently executed series of processes, from the data DA of the vehicle 20 in the database DB. Thereafter, the management server 70 transmits, to the friend device 51, a completion notification M44 indicating that the series of deletion processes of the guest key KN in accordance with the deletion reservation D41 has been completed.

Upon receiving the completion notification M44, the friend device 51 executes the process of step S73. In step S73, the friend device 51 causes the HMI 32 to present information indicating that deletion of the guest key KN, which is the subject of the deletion reservation D41, has been completed. For example, the friend device 51 causes the HMI 32 to display an image indicating the completion of the deletion of the guest key KN. Thereafter, the management system 10 terminates the current series of processes for deleting the guest key KN.

### Series of Processes When Prescribed Deletion Operation Is Received

Next, a series of processes performed by the management system 10 when receiving a prescribed deletion operation will be described. The prescribed deletion operation is an operation for deleting all the digital keys registered to the vehicle 20.

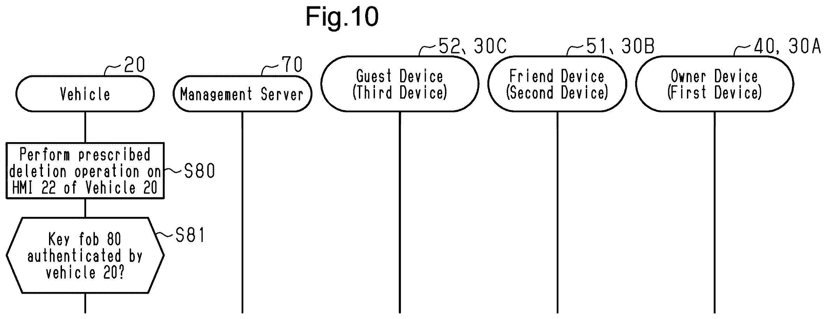

As shown in Fig. 10, in step S80, a deletion operation for deleting all the digital keys registered to the vehicle 20 is performed on the HMI 22, which is a user interface of the vehicle 20. When receiving a deletion operation for deleting all the digital keys registered to the vehicle 20, the vehicle 20 advances the process to step S81.

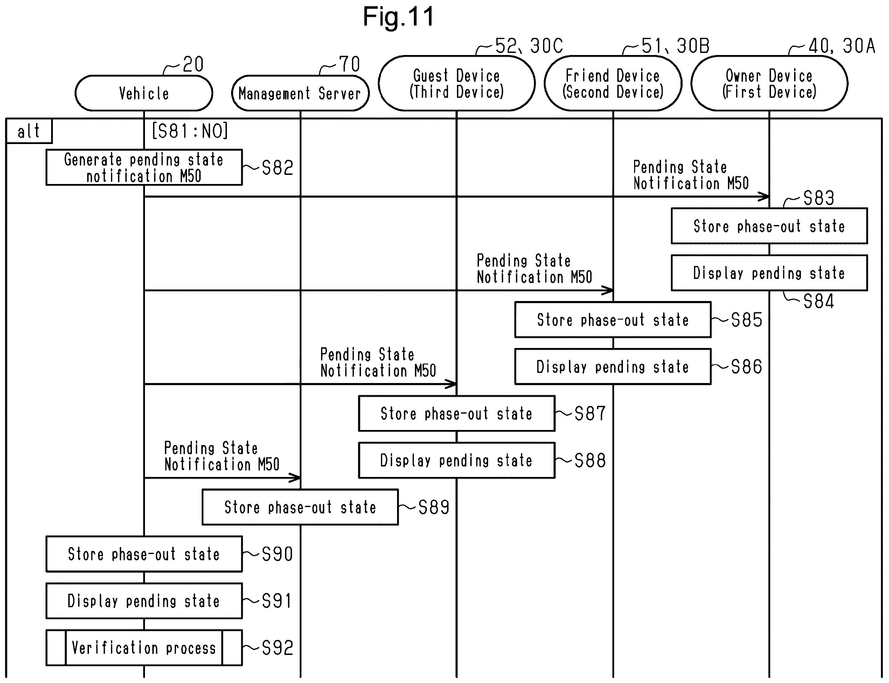

In step S81, the vehicle 20 determines whether the key fob 80 has been authenticated by the vehicle 20. If the key fob 80 has not been authenticated by the vehicle 20 (step S81: NO), the vehicle 20 advances the process step S82 shown in Fig. 11.

### Case in which Step S81 is NO

In step S82, the vehicle 20 generates a pending state notification M50. The pending state notification M50 is a notification indicating that the state of the digital key that is the subject of the deletion operation is set to a phase-out state, in which the digital key will be deleted when the prescribed condition RC is satisfied. The pending state notification M50 includes information related to a condition for exiting the phase-out state and completely deleting the digital key.

The vehicle 20 transmits the pending state notification M50 to the owner device 40 by controlling the communication module 21. The vehicle 20 transmits the pending state notification M50 to the friend devices 51 by controlling the communication module 21. Fig. 11 shows the second device 30B as a representative of the friend devices 51. The vehicle 20 transmits the pending state notification M50 to the guest devices 52 by controlling the communication module 21. Fig. 11 shows the third device 30C as a representative of the guest devices 52. The vehicle 20 transmits the pending state notification M50 to the management server 70 by controlling the communication module 21.

Upon receiving the pending state notification M50, the owner device 40 executes the process of step S83. In step S83, the owner device 40 stores information indicating that digital keys are in the phase-out state. Thereafter, the owner device 40 advances the process to step S84.

In step S84, the owner device 40 displays a notification image IM indicating that the digital keys are in the phase-out state on the display of HMI 32.

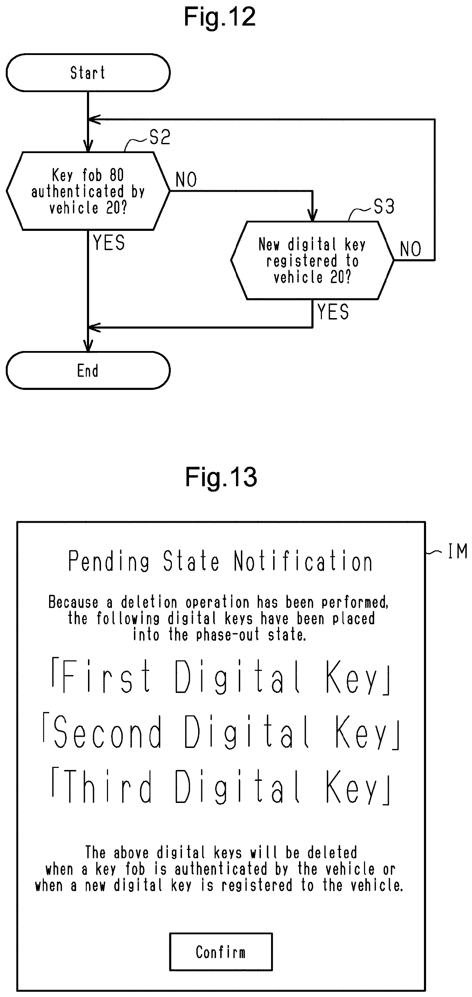

As shown in Fig. 13, the notification image IM includes an image showing the digital keys in the phase-out state. Specifically, the notification image IM includes images indicating all the digital keys registered to the vehicle 20. For example, in a case in which the digital keys registered to the vehicle 20 are the first digital key DK1 through the third digital key DK3, the notification image IM includes images indicating character strings of First Digital Key, Second Digital Key, and Third Digital Key.

The notification image IM includes an image indicating a condition for ending the phase-out state and completely deleting the digital keys. The condition for ending the phase-out state and completely deleting the digital keys is that the key fob 80 is authenticated by the vehicle 20 or a new digital key is registered to the vehicle 20. When the user performs an operation for selecting a portion of the notification image IM displayed as "Confirm," the owner device 40 terminates display of the notification image IM on the display of the HMI 32.

Upon receiving the pending state notification M50, the friend device 51 executes the process of step S85. In step S85, the friend device 51 stores information indicating that the digital keys are in the phase-out state. Thereafter, the friend device 51 advances the process to step S86. In step S86, the friend device 51 displays the notification image IM indicating that the digital keys are in the phase-out state on the display.

Upon receiving the pending state notification M50, the guest device 52 executes the process of step S87. In step S87, the guest device 52 stores information indicating that digital keys are in the phase-out state. Thereafter, the guest device 52 advances the process to step S88. In step S88, the guest device 52 displays the notification image IM indicating that the digital keys are in the phase-out state on the display.

Upon receiving the pending state notification M50, the management server 70 executes the process of step S89. In step S89, the management server 70 stores information indicating that digital keys are in the phase-out state.

After transmitting the pending state notification M50, the vehicle 20 advances the process to step S90. In step S90, the vehicle 20 sets the states of all the digital keys registered to the vehicle 20 to the phase-out state. Thereafter, the vehicle 20 advances the process to step S91. In step S91, the vehicle 20 displays the notification image IM indicating that the digital keys are in the phase-out state on the display. Thereafter, the vehicle 20 advances the process to step S92. In step S92, the vehicle 20 performs a verification process of verifying that the prescribed condition RC is satisfied.

### Verification Process

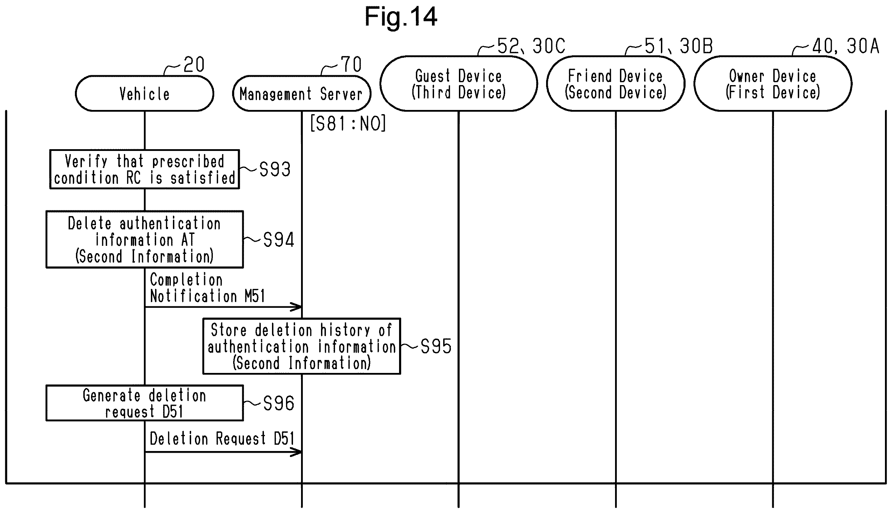

As shown in Fig. 12, when the vehicle 20 starts the verification process, the vehicle 20 first performs a process of step S2. In the process of step S2, the vehicle 20 determines whether the key fob 80 has been authenticated by the vehicle 20. If the key fob 80 is authenticated by the vehicle 20 (step S2: YES), the vehicle 20 ends the verification process shown in Fig. 12. When the key fob 80 has not been authenticated by the vehicle 20 (step S2: NO), the vehicle 20 advances the process to step S3. In step S3, the vehicle 20 determines whether a new digital key has been registered to the vehicle 20. When a new digital key is registered to the vehicle 20 (step S3: YES), the vehicle 20 ends the verification process shown in Fig. 12. When a new digital key has not been registered to the vehicle 20 (step S3: NO), the vehicle 20 executes the process of step S2 again. That is, the vehicle 20 continues the verification process until the key fob 80 is authenticated by the vehicle 20 or a new digital key is registered to the vehicle 20. When the vehicle 20 ends the verification process, the vehicle 20 advances the process to step S93 illustrated in Fig. 14.

As shown in Fig. 14, in the process of step S93, the vehicle 20 verifies that the prescribed condition RC is satisfied. When the key fob 80 is authenticated by the vehicle 20, the vehicle 20 determines that the prescribed condition RC is satisfied. The vehicle 20 also determines that the prescribed condition RC is satisfied when a new digital key is registered to the vehicle 20. When the prescribed condition RC is satisfied, the vehicle 20 advances the process to step S94.

In step S94, the vehicle 20 deletes the authentication information AT of the digital key set to the phase-out state from the authentication information AT of the digital keys stored in the storage device 28. Thereafter, the vehicle 20 transmits a completion notification M51 indicating that the authentication information AT has been deleted to the management server 70.

Upon receiving the completion notification M51, the management server 70 executes the process of step S95. In step S95, the management server 70 stores information indicating the deletion of the authentication information AT for authenticating the digital keys to be deleted in the currently executed series of deletion processes.

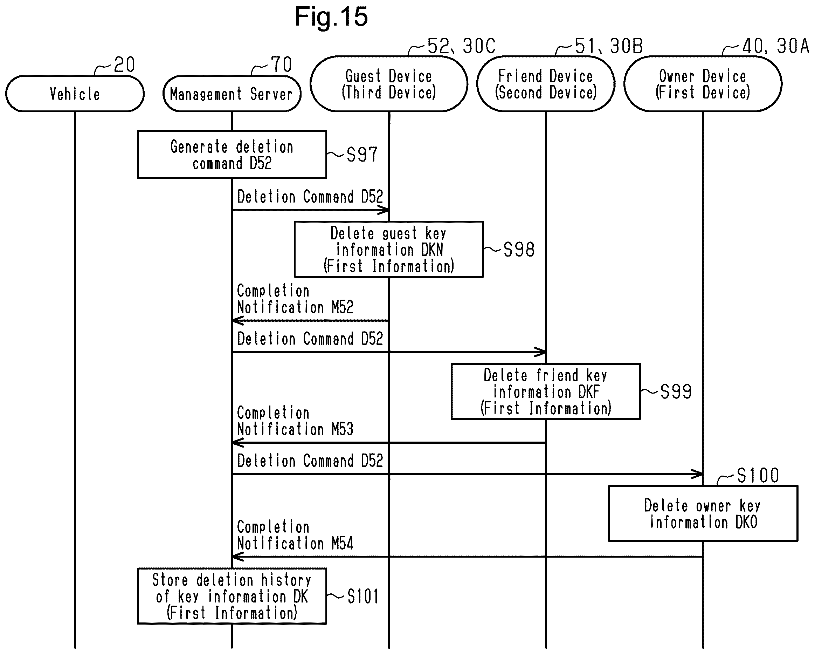

After transmitting the completion notification M51, the vehicle 20 executes the process of step S96. In step S96, the vehicle 20 generates a deletion request D51. The deletion request D51 is a request to cause the management server 70 to delete the information related to a digital key. The vehicle 20 transmits the deletion request D51 to the management server 70. Thereafter, the process is advanced to steps shown in Fig. 15.

As shown in Fig. 15, upon receiving the deletion request D51, the management server 70 executes the process of step S97. In step S97, the management server 70 generates a deletion command D52 for instructing execution of deletion of the key information DK indicating the digital key that is the subject of the deletion request D51. Then, the management server 70 transmits the deletion command D52 to the devices 30 that store the key information DK indicating the digital key that is the subject of the deletion request D51. Specifically, the management server 70 transmits the deletion command D52 to the first device 30A, the second device 30B, and the third device 30C.

Upon receiving the deletion command D52, the third device 30C executes the process of step S98. In step S98, the third device 30C deletes the guest key information DKN in accordance with the deletion command D52. Then, the third device 30C transmits, to the management server 70, a completion notification M52 indicating that the deletion in accordance with the deletion command D52 has been completed.

Upon receiving the deletion command D52, the second device 30B executes the process of step S99. In step S99, the second device 30B deletes the friend key information DKF in accordance with the deletion command D52. Then, the second device 30B transmits, to the management server 70, a completion notification M53 indicating that the deletion in accordance with the deletion command D52 has been completed.

Upon receiving the deletion command D52, the first device 30A executes the process of step S98. In step S98, the first device 30A deletes the owner key information DKO in accordance with the deletion command D52. Then, the first device 30A transmits, to the management server 70, a completion notification M54 indicating that the deletion in accordance with the deletion command D52 has been completed.

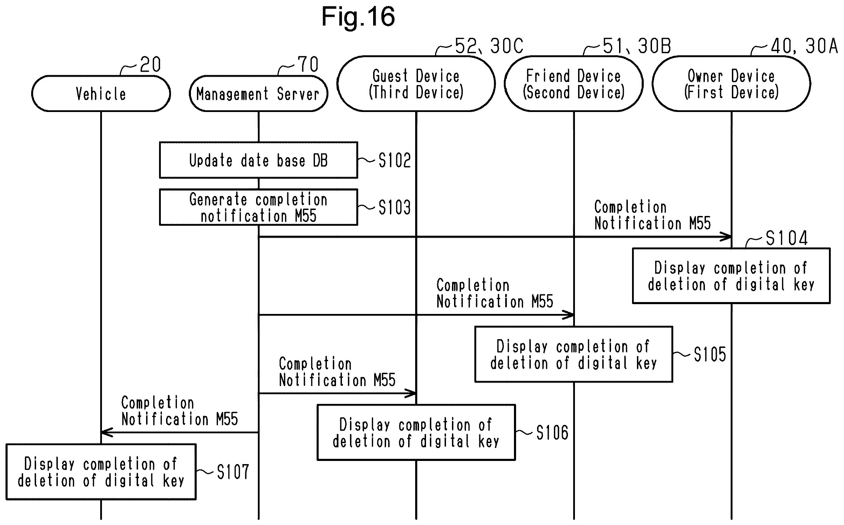

After receiving the completion notifications from all the devices 30 to which the deletion command D52 was transmitted, the management server 70 executes the process of step S101. That is, after receiving the completion notification M52, the completion notification M53, and the completion notification M54, the management server 70 executes the process of step S101. In step S101, the management server 70 stores information indicating that the key information DK has been deleted from the devices 30. Thereafter, the management server 70 advances the process to step S102 shown in Fig. 16.

As shown in Fig. 16, the management server 70 updates the database DB in step S102. Specifically, the management server 70 deletes, from the data DA of the vehicle 20 stored in the database DB, information related to the digital devices 30 that have the digital keys to be deleted in the currently executed series of processes. Thereafter, the management server 70 transmits, to the first device 30A, the second device 30B, the third device 30C, and the vehicle 20, a deletion completion notification M55 indicating that a series of deletion processes for digital keys in accordance with the deletion request D51 has been completed.

Upon receiving the completion notification M55, the first device 30A executes the process of step S104. In step S104, the first device 30A causes the HMI 32 to present information indicating that deletion of all the digital keys registered to the vehicle 20 has been completed. For example, the first device 30A displays, on the HMI 32, an image indicating that deletion of all the digital keys that have been set to the phase-out state has been completed.

Upon receiving the completion notification M55, the second device 30B executes the process of step S105. In step S105, the second device 30B causes the HMI 32 to present information indicating that deletion of all the digital keys registered to the vehicle 20 has been completed. For example, the second device 30B displays, on the HMI 32, an image indicating that deletion of all the digital keys that have been set to the phase-out state has been completed.

Upon receiving the completion notification M55, the third device 30C executes the process of step S106. In step S106, the third device 30C causes the HMI 32 to present information indicating that deletion of all the digital keys registered to the vehicle 20 has been completed. For example, the third device 30C displays, on the HMI 32, an image indicating that deletion of all the digital keys that have been set to the phase-out state has been completed.

Upon receiving the completion notification M55, the vehicle 20 executes the process of step S107. In step S107, the vehicle 20 causes the HMI 22 to present information indicating that deletion of all the digital keys that have been set to the phase-out state has been completed, from among the digital keys registered to the vehicle 20. For example, the vehicle 20 displays, on the HMI 22, an image indicating that deletion of all the digital keys that have been set to the phase-out state has been completed. Thereafter, the management system 10 ends the series of processes for the prescribed deletion operation that is currently performed.

### Case in which Step S81 is YES

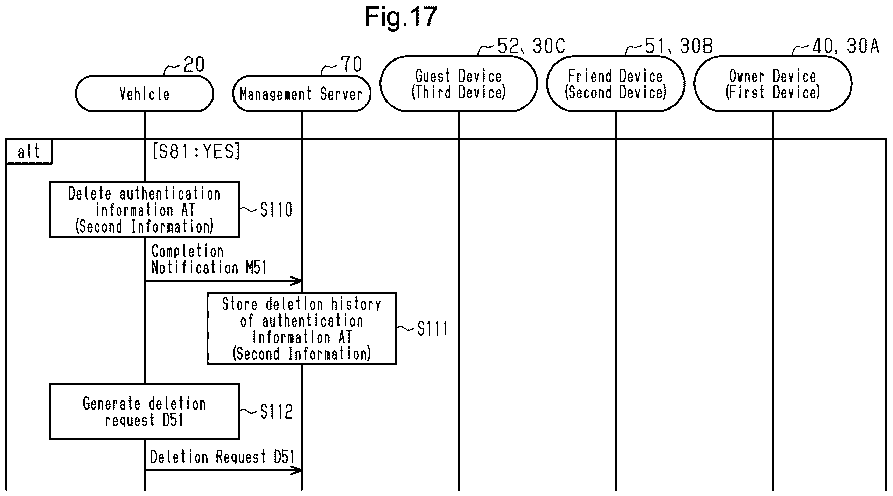

In step S81 shown in Fig. 10, if the key fob 80 has been authenticated by the vehicle 20 (step S81: YES), the vehicle 20 advances the process step S110 shown in Fig. 17.

In step S110, the vehicle 20 deletes the authentication information AT of all the digital keys stored in the storage device 28, as in step S94 shown in Fig. 14. Thereafter, the vehicle 20 transmits, to the management server 70, a completion notification M51 indicating that the authentication information AT stored in the storage device 28 has been deleted.

Upon receiving the completion notification M51, the management server 70 executes the process of step S111. The process of step S111 is the same as the process of step S95 shown in Fig. 14 and thus will not be described.

After transmitting the completion notification M51, the vehicle 20 executes the process of step S112. In step S112, the vehicle 20 generates a deletion request D51, as in step S96 shown in Fig. 14. The deletion request D51 is a request to cause the management server 70 to delete the information related to a digital key. The vehicle 20 transmits the deletion request D51 to the management server 70. Thereafter, the process is advanced to steps shown in Fig. 15. The subsequent processes are the same as the processes after step S97 in the case in which the key fob 80 has not been authenticated by the vehicle 20 (step S81: NO), and thus the detailed description thereof will be omitted.

### Operation of the First Embodiment

The vehicle 20 receives a deletion operation for the authentication information AT stored in the vehicle 20 via the HMI 22, which is a user interface included in the vehicle 20. When the prescribed condition RC is satisfied in a case in which the vehicle 20 receives the deletion operation via the HMI 22, the vehicle 20 deletes the authentication information AT. Accordingly, until the prescribed condition RC is satisfied, the devices 30 storing the key information DK corresponding to the authentication information AT stored in the vehicle 20 functions as digital keys registered to the vehicle 20. In the present embodiment, the key information DK is first information related to digital keys. That is, each of the guest key information DKN, the friend key information DKF, and the owner key information DKO is an example of the first information. In the present embodiment, the authentication information AT is second information related to the digital key.

### Advantages of the First Embodiment

(1-1) When the vehicle 20 receives a deletion operation via the HMI 22, the vehicle 20 sets the state of the digital key which is the subject of the deletion operation to the phase-out state. When the prescribed condition RC is satisfied after the state of the digital key is set to the phase-out state, the vehicle 20 deletes the authentication information AT of the digital key set to the phase-out state. Therefore, since the authentication information AT is not deleted until the prescribed condition RC is satisfied, the device 30 owned by the user can be used as a digital key. This reduces the likelihood that the user will experience discomfort due to the user's device 30 suddenly becoming unusable as a digital key.

(1-2) When the prescribed deletion operation for deleting all the digital keys registered to the vehicle 20 is performed, the execution device 27 sets the state of the digital keys that are subject to the deletion operation to the phase-out state. Once all the digital keys set to the phase-out state are deleted, the vehicle 20 can no longer be used with the devices 30 that were registered as digital keys. After setting the state of the digital keys to the phase-out state, the vehicle 20 deletes all the digital keys registered to the vehicle 20 when the prescribed condition RC is satisfied. Accordingly, until the prescribed condition RC is satisfied, the authentication information AT is not deleted, and thus all the digital keys registered to the vehicle 20 remain usable. This reduces the likelihood that the user will experience discomfort due to all digital keys registered to the vehicle 20 suddenly becoming unusable.

(1-3) The vehicle 20 can also be operated through authentication of the key fob 80. If the key fob 80 is authenticated by the vehicle 20, the vehicle 20 can be operated by the key fob 80 even if the digital keys registered to the vehicle 20 are deleted. When the digital keys registered to the vehicle 20 are deleted in a state in which the key fob 80 is not authenticated by the vehicle 20, it is necessary to authenticate the key fob 80 by the vehicle 20 in order to operate the vehicle 20. When the prescribed deletion operation is performed in a state in which the key fob 80 has not been authenticated by the vehicle 20, the execution device 27 sets the state of the digital keys that are the subjects of the deletion operation to the phase-out state. This reduces the likelihood that digital keys registered to the vehicle 20 will suddenly become unusable while the key fob 80, which serves as an alternative to the digital keys, is not authenticated by the vehicle 20.

(1-4) When the key fob 80 is authenticated by the vehicle 20, the vehicle 20 can be operated by the key fob 80 even if the digital keys are deleted. When the key fob 80 is authenticated by the vehicle 20, the execution device 27 determines that the prescribed condition RC is satisfied. This reduces the likelihood that digital keys registered to the vehicle 20 will suddenly become unusable in a situation in which the key fob 80, serving as an alternative to the digital keys, cannot be authenticated by the vehicle 20.

(1-5) When a new digital key is registered to the vehicle 20, the vehicle 20 can be operated with the new digital key even if a digital key registered before registration of the new digital key is deleted. When a new digital key is registered to the vehicle 20, the execution device 27 determines that the prescribed condition RC is satisfied. This reduces the likelihood that digital keys registered to the vehicle 20 will suddenly become unusable in a situation in which no new digital key has been registered to the vehicle 20.

(1-6) The vehicle 20 includes the HMI 22 as a display for displaying images. The execution device 27 displays, on the display, the notification image IM indicating that digital keys are in the phase-out state. The vehicle 20 can present the information of the digital keys in the phase-out state to occupants of the vehicle 20.

(1-7) There is a need of an occupant of the vehicle 20 to ascertain conditions under which a digital key is deleted. The notification image IM includes an image indicating a condition for ending the phase-out state and completely deleting the digital keys. Accordingly, the vehicle 20 satisfies that need.

(1-8) A need exists on the part of the owner of the vehicle 20 to ascertain a deletion operation that was carried out through operation of an interface of the vehicle 20. The vehicle 20 includes the communication module 21. By controlling the communication module 21, the execution device 27 transmits, to the owner device 40, the pending state notification M50, which indicates that digital keys are in the phase-out state. This satisfies that need of the owner of the vehicle 20.

(1-9) A need exists on the part of a user of a digital key to determine whether a digital key registered to the device 30 carried by the user is in the fade-out state. The vehicle 20 includes the communication module 21. By controlling the communication module 21, the execution device 27 transmits, to a device 30 storing information related to a digital key in the phase-out state, the pending state notification M50, which indicates that the digital key is in the phase-out state. This satisfies that need of the user of the digital key.

(1-10) There is a need of a user of a digital key to ascertain a condition under which the digital key is completely deleted. The pending state notification M50 includes information related to the condition for completely deleting the digital key. Accordingly, the vehicle 20 satisfies that need of the user of the digital key.

### Modifications of the First Embodiment

The first embodiment may be modified as follows.

The vehicle 20 may execute the process of step S81 when receiving, from a source other than the HMI22, a deletion operation for deleting all the digital keys registered to the vehicle 20.

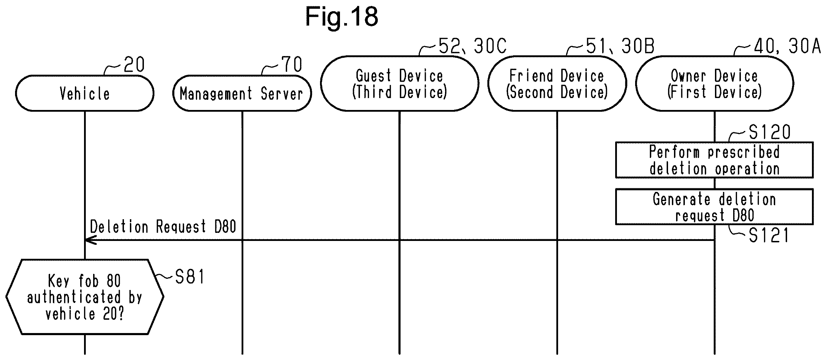

As shown in Fig. 18, in step S120, a prescribed deletion operation is performed in the owner device 40. The prescribed deletion operation is an operation for deleting all the digital keys registered to the vehicle 20. Thereafter, the owner device 40 advances the process to step S121. In step S121, the owner device 40 generates a deletion request D80 and transmits the deletion request D80 to the vehicle 20. The deletion request D80 is a request to delete all the digital keys registered to the vehicle 20. When receiving the deletion request D80, the vehicle 20 advances the process to step S81. The subsequent processes are identical to the processes from step S81 onward in the first embodiment, so detailed description will be omitted. In this manner, even when the prescribed deletion operation is performed on the owner device 40, the execution device 27 can be configured to set a state of the digital key to the phase-out state and to delete second information when the prescribed condition RC is satisfied.

### Second Embodiment

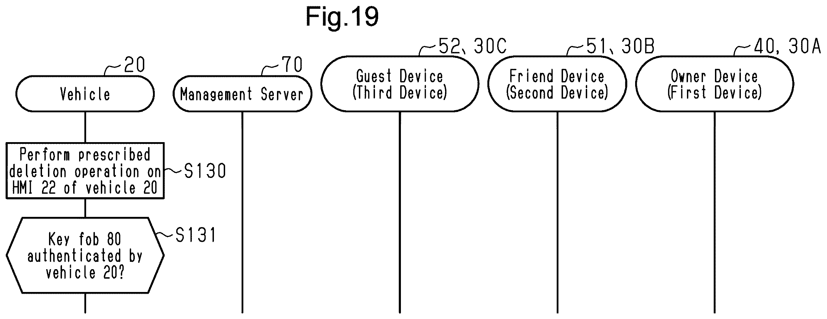

Hereinafter, a management system 10 according to a second embodiment will be described with reference to Figs. 19 through 24. The second embodiment will be described, focusing on the differences from the first embodiment. The description will focus on the differences from the first embodiment. The same points will be briefly described or will not be described.

As shown in Fig. 19, in step S130, a prescribed deletion operation is performed on the HMI22, which is a user interface of the vehicle 20. The prescribed deletion operation is an operation for deleting all the digital keys registered to the vehicle 20. When receiving a deletion operation for deleting all the digital keys registered to the vehicle 20, the vehicle 20 advances the process to step S131.

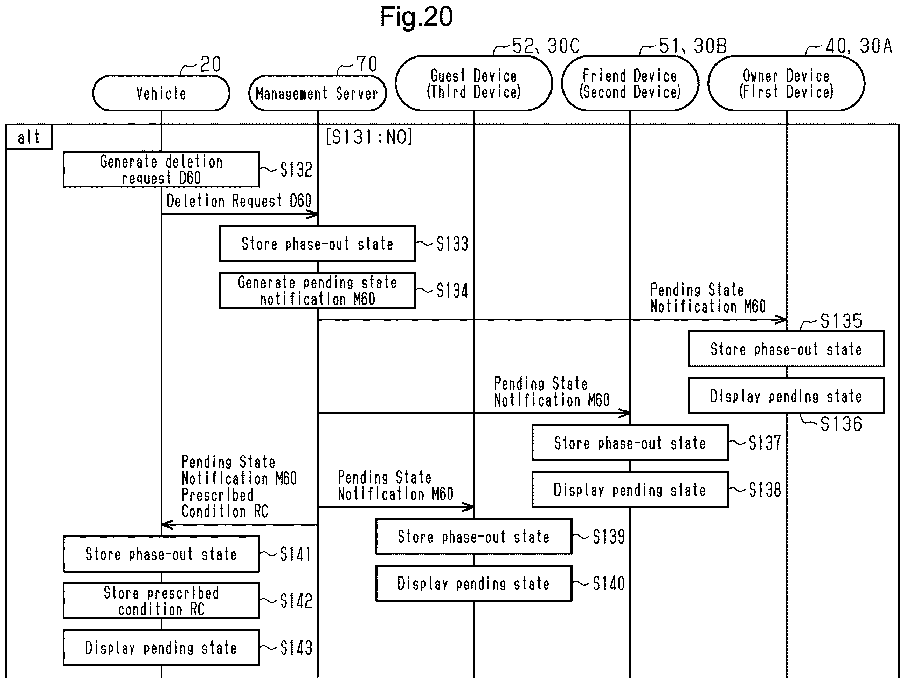

In step S131, the vehicle 20 determines whether the key fob 80 has been authenticated by the vehicle 20. If the key fob 80 has not been authenticated by the vehicle 20 (step S131: NO), the vehicle 20 advances the process step S132 shown in Fig. 20.

### Case in which Step S131 is NO

In step S132, the vehicle 20 generates a deletion request D60. The deletion request D60 is a request to cause the management server 70 to delete the information related to a digital key. The vehicle 20 transmits the deletion request D60 to the management server 70.

Upon receiving the deletion request D60, the management server 70 executes the process of step S133. In step S133, the management server 70 sets the state of the digital key that is the subject of the deletion operation to the phase-out state, in which the digital key will be deleted when the prescribed condition RC is satisfied. Thereafter, the management server 70 advances the process to step S134.

In step S134, the vehicle 20 generates a pending state notification M60. The pending state notification M60 is a notification indicating that the state of the digital key that is the subject of the deletion operation is set to a phase-out state, in which the digital key will be deleted when the prescribed condition RC is satisfied. The pending state notification M60 includes information related to a condition for exiting the phase-out state and completely deleting the digital key.

The management server 70 transmits the pending state notification M60 to the owner device 40 by controlling the communication module 73. The management server 70 transmits the pending state notification M60 to the friend devices 51 by controlling the communication module 73. Fig. 20 shows the second device 30B as a representative of the friend devices 51. The management server 70 transmits the pending state notification M60 to the guest device 52 by controlling the communication module 73. Fig. 20 shows the third device 30C as a representative of the guest devices 52. The management server 70 transmits the pending state notification M60 and the prescribed condition RC to the vehicle 20 by controlling the communication module 73.

Upon receiving the pending state notification M60, the owner device 40 executes the process of step S135. In step S135, the owner device 40 stores information indicating that digital keys are in the phase-out state. Thereafter, the owner device 40 advances the process to step S136.

In step S136, the owner device 40 displays a notification image IM indicating that the digital keys are in the phase-out state on the display of HMI 32. Step S136 is identical to step S84 in the first embodiment, so detailed description will be omitted.

Upon receiving the pending state notification M60, the friend device 51 executes the process of step S137. In step S137, the friend device 51 stores information indicating that the digital keys are in the phase-out state. Thereafter, the friend device 51 advances the process to step S138. In step S138, the friend device 51 displays a notification image IM indicating that the digital keys are in the phase-out state on the display of HMI 32.

Upon receiving the pending state notification M60, the guest device 52 executes the process of step S139. In step S139, the guest device 52 stores information indicating that digital keys are in the phase-out state. Thereafter, the guest device 52 advances the process to step S140. In step S140, the guest device 52 displays the notification image IM indicating that the digital keys are in the phase-out state on the display of the HMI 32.

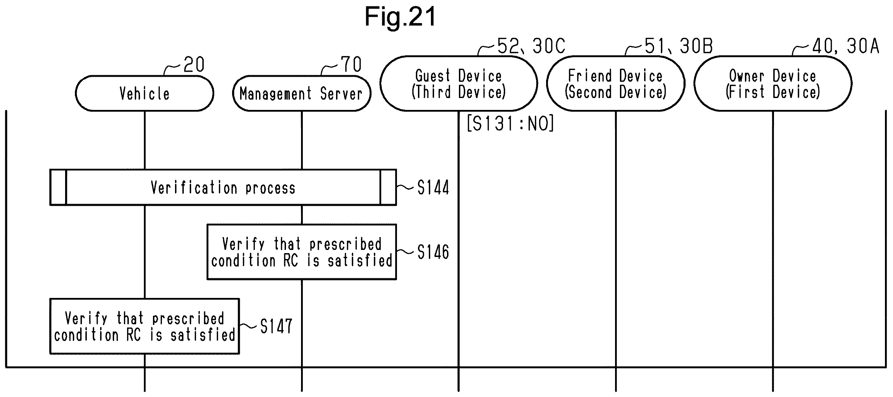

Upon receiving the pending state notification M60 and the prescribed condition RC, the vehicle 20 executes the process of step S141. In step S141, the vehicle 20 stores information indicating that the digital keys are in the phase-out state. Thereafter, the vehicle 20 advances the process to step S142. In step S142, the vehicle 20 stores the prescribed condition RC. Thereafter, the vehicle 20 advances the process to step S143. In step S143, the vehicle 20 displays the notification image IM indicating that the digital keys are in the phase-out state on the display of the HMI 22. Thereafter, the process is advanced to steps shown in Fig. 21.

### Processes Executed by Management Server 70

As shown in Fig. 21, after executing the process of step S143, the vehicle 20 and the management server 70 jointly execute the process of step 144. In step S144, the vehicle 20 and the management server 70 jointly execute the verification process.

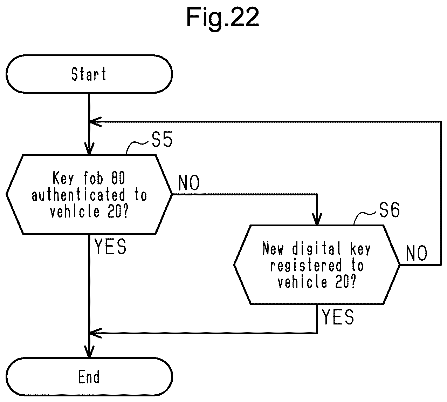

As shown in Fig. 22, when the vehicle 20 and the management server 70 start the verification process, the vehicle 20 first executes the process of step S5. In step S5, the vehicle 20 determines whether the key fob 80 has been authenticated by the vehicle 20. Then, the vehicle 20 transmits the determination result to the management server 70. If the key fob 80 is authenticated by the vehicle 20 (step S5: YES), the vehicle 20 and the management server 70 end the verification process shown in Fig. 22. When the key fob 80 has not been authenticated by the vehicle 20 (step S5: NO), that is, when the management server 70 receives a determination result indicating that the key fob 80 has not been authenticated by the vehicle 20, the management server 70 advances the process to step S6. In step S6, the management server 70 determines whether a new digital key has been registered to the vehicle 20. Then, the management server 70 transmits the determination result to the vehicle 20. When a new digital key is registered to the vehicle 20 (step S6: YES), the vehicle 20 and the management server 70 end the verification process shown in Fig. 22. When a new digital key has not been registered to the vehicle 20 (step S6: NO), that is, when the vehicle 20 receives a determination result indicating that a new digital key has not been registered to the vehicle 20, the vehicle 20 executes the process of step S5 again. That is, the vehicle 20 and the management server 70 continue the verification process until the key fob 80 is authenticated by the vehicle 20 or a new digital key is registered to the vehicle 20. When the verification process is ended, the management server 70 advances the process to step S146 shown in Fig. 21.

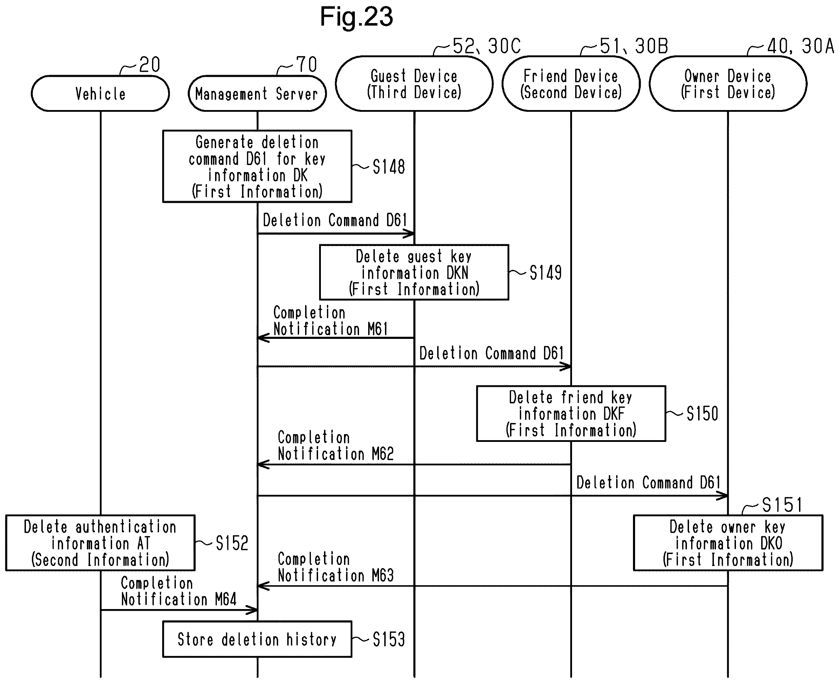

As shown in Fig. 21, in the process of step S146, the management server 70 verifies that the prescribed condition RC is satisfied. When the key fob 80 is authenticated by the vehicle 20, the management server 70 determines that the prescribed condition RC is satisfied. The management server 70 also determines that the prescribed condition RC is satisfied when a new digital key is registered to the vehicle 20. When the prescribed condition RC is satisfied, the management server 70 advances the process to step S148 shown in Fig. 23.

As shown in Fig. 23, in step S148, the management server 70 generates a deletion command D61 for instructing execution of deletion of the key information DK indicating the digital key that is the subject of the deletion request D60. The management server 70 transmits the deletion command D61 to the devices 30 that store the key information DK indicating the digital key that is the subject of the deletion request D60. Specifically, the management server 70 transmits the deletion command D61 to the first device 30A, the second device 30B, and the third device 30C.

Upon receiving the deletion command D61, the third device 30C executes the process of step S149. In step S149, the third device 30C deletes the guest key information DKN in accordance with the deletion command D61. Then, the third device 30C transmits, to the management server 70, a completion notification M61 indicating that the deletion in accordance with the deletion command D61 has been completed.

Upon receiving the deletion command D61, the second device 30B executes the process of step S150. In step S150, the second device 30B deletes the friend key information DKF in accordance with the deletion command D61. Then, the second device 30B transmits, to the management server 70, a completion notification M62 indicating that the deletion in accordance with the deletion command D61 has been completed.

Upon receiving the deletion command D61, the first device 30A executes the process of step S151. In step S151, the first device 30A deletes the owner key information DKO in accordance with the deletion command D61. Then, the first device 30A transmits, to the management server 70, a completion notification M63 indicating that the deletion in accordance with the deletion command D61 has been completed.

### Processes Executed by the Vehicle 20

As shown in Fig. 21, when the verification process in step S144 is ended, the vehicle 20 advances the process to step S147.

In step S147, the vehicle 20 verifies that the prescribed condition RC is satisfied. When the key fob 80 is authenticated by the vehicle 20, the vehicle 20 determines that the prescribed condition RC is satisfied. The vehicle 20 also determines that the prescribed condition RC is satisfied when a new digital key is registered to the vehicle 20. When the prescribed condition RC is satisfied, the vehicle 20 advances the process to step S152 shown in Fig. 23.

In step S152, the vehicle 20 deletes all the authentication information AT of the digital key set to the phase-out state from the authentication information AT of the digital keys stored in the storage device 28. Thereafter, the vehicle 20 transmits a completion notification M64 indicating that the authentication information AT has been deleted to the management server 70.

### Processes Executed by Management Server 70 After Receiving Completion Notification

After receiving the completion notifications from all the devices 30 to which the deletion command D61 has been transmitted, and after receiving the completion notification M64 from the vehicle 20, the management server 70 executes the process of step S153. That is, after receiving the completion notification M61, the completion notification M62, the completion notification M63, and the completion notification M64, the management server 70 executes the process of step S153. In step S153, the management server 70 stores information indicating that the key information DK has been deleted from the devices 30. Thereafter, the management server 70 advances the process to step S102 shown in Fig. 16. The subsequent processes are identical to the processes from step S102 onward in the first embodiment, so detailed description will be omitted.

### Case in which Step S131 is YES

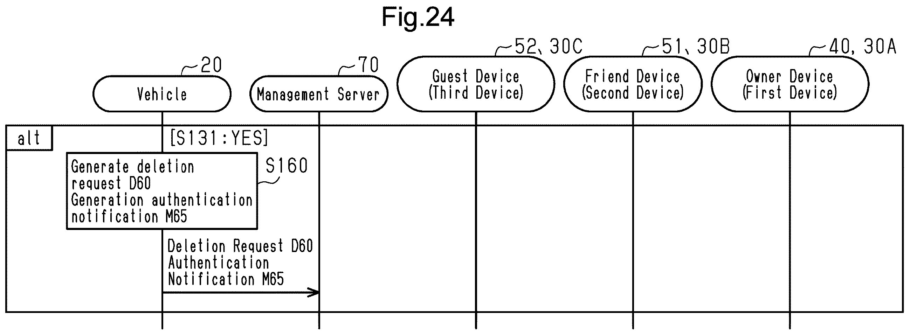

In step S131 shown in Fig. 24, if the key fob 80 has been authenticated by the vehicle 20 (step S131: YES), the vehicle 20 advances the process step S160 shown in Fig. 24.

In step S160, the vehicle 20 generates the deletion request D60 and an authentication notification M65. The deletion request D60 is a request to delete all the digital keys registered to the vehicle 20. The authentication notification M65 is a notification indicating that the key fob 80 has been authenticated by the vehicle 20. Thereafter, the vehicle 20 transmits the deletion request D60 and the authentication notification M65 to the management server 70.

Upon receiving the deletion request D60 and the authentication notification M65, the management server 70 executes a series of processes shown in Fig. 23. After transmitting the deletion request D60 and the authentication notification M65, the vehicle 20 executes the process of step S152 shown in Fig. 23.

### Operation of the Second Embodiment

When the prescribed condition RC is satisfied, the vehicle 20 deletes the authentication information AT stored in the storage device 28 of the vehicle 20. Accordingly, until the prescribed condition RC is satisfied, the devices 30 storing the key information DK corresponding to the authentication information AT stored in the vehicle 20 functions as digital keys registered to the vehicle 20. In the present embodiment, the key information DK is first information related to digital keys. That is, each of the guest key information DKN, the friend key information DKF, and the owner key information DKO is an example of the first information. In the present embodiment, the authentication information AT is second information related to the digital key.

### Advantages of the Second Embodiment

The second embodiment provides the following advantages in addition to advantage (1-2) through (1-7) of the first embodiment.

(2-1) When the vehicle 20 receives a deletion operation via the HMI 22, the vehicle 20 transmits the deletion request D60 to the management server 70. In a case in which the prescribed condition RC is satisfied after the pending state notification M60 is received from the management server 70, the vehicle 20 deletes the authentication information AT of the digital key that is the subject of the deletion operation. Therefore, since the authentication information AT is not deleted until the prescribed condition RC is satisfied, the device 30 owned by the user can be used as a digital key. This reduces the likelihood that the user will experience discomfort due to the user's device 30 suddenly becoming unusable as a digital key.

(2-2) A need exists on the part of the owner of the vehicle 20 to ascertain a deletion operation that was carried out through operation of an interface of the vehicle 20. The management server 70 transmits the pending state notification M60, which indicates that the digital key is in the phase-out state, to the owner device 40. This satisfies that need of the owner of the vehicle 20.

(2-3) A need exists on the part of a user of a digital key to determine whether a digital key registered to the device 30 carried by the user is in the fade-out state. The management server 70 transmits, to the device 30 storing information related to the digital key in the phase-out state, the pending state notification M60, which indicates that the digital key is in the phase-out state. This satisfies that need of the user of the digital key.

(2-4) There is a need of a user of a digital key to ascertain a condition under which the digital key is completely deleted. The pending state notification M60 includes information related to the condition for completely deleting the digital key. Accordingly, the management system 10 satisfies that need of the user of the digital key.

### Modifications of the Second Embodiment

The above-described second embodiment may be modified as follows.

The vehicle 20 may execute the process of step S131 when receiving, from a source other than the HMI22, a deletion operation for deleting all the digital keys registered to the vehicle 20.

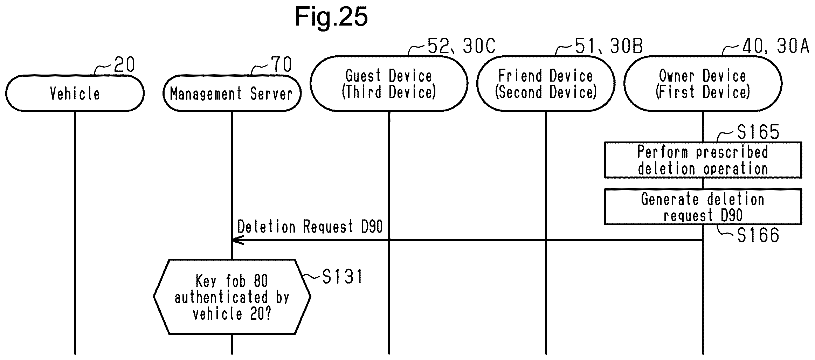

As shown in Fig. 25, in step S165, a prescribed deletion operation is performed in the owner device 40. The prescribed deletion operation is an operation for deleting all the digital keys registered to the vehicle 20. Thereafter, the owner device 40 advances the process to step S166. In step S166, the owner device 40 generates a deletion request D90 and transmits the deletion request D90 to the vehicle 20. The deletion request D90 is a request to delete all the digital keys registered to the vehicle 20. When receiving the deletion request D90, the vehicle 20 advances the process to step S131. The subsequent processes are identical to the processes from step S131 onward in the second embodiment, so detailed description will be omitted. In this manner, even when the prescribed deletion operation is performed on the owner device 40, the execution device 27 is configured to transmit the deletion request D90 to the management server 70 and to delete the second information when the prescribed condition RC is satisfied.

### Third Embodiment

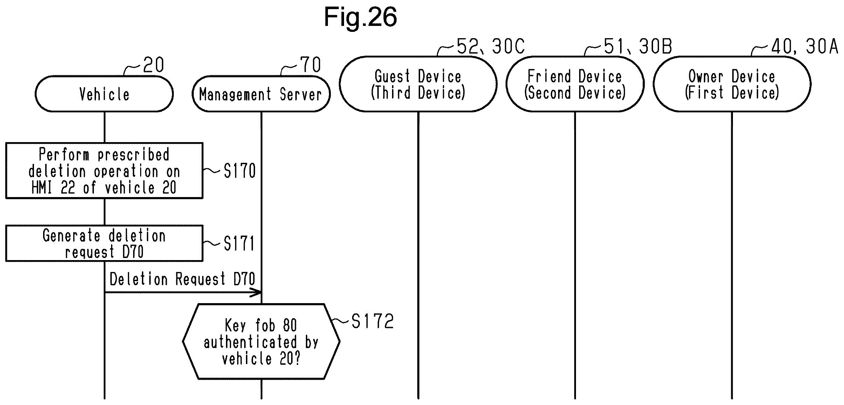

Hereinafter, a management server 70 according to a third embodiment will be described with reference to Figs. 26 through 29. The third embodiment will be described, focusing on the differences from the first embodiment. The description will focus on the differences from the first embodiment. The same points will be briefly described or will not be described.

As shown in Fig. 26, in step S170, a prescribed deletion operation is performed on the HMI22, which is a user interface of the vehicle 20. The prescribed deletion operation is an operation for deleting all the digital keys registered to the vehicle 20. When receiving a deletion operation for deleting all the digital keys registered to the vehicle 20, the vehicle 20 advances the process to step S171.

In step S171, the vehicle 20 generates a deletion request D70. The deletion request D70 is a request to cause the management server 70 to delete the information related to a digital key. Thereafter, the vehicle 20 transmits the deletion request D70 to the management server 70.

Upon receiving the deletion request D70, the management server 70 executes the process of step S172. In step S172, the management server 70 determines whether the key fob 80 has been authenticated by the vehicle 20.

Specifically, for example, the vehicle 20 transmits, to the management server 70, information indicating whether the key fob 80 has been authenticated by the vehicle 20. The management server 70 receives, from the vehicle 20, information indicating whether the key fob 80 has been authenticated by the vehicle 20. The management server 70 determines whether the key fob 80 has been authenticated by the vehicle 20 based on the received information.

### Case in which Step S172 is NO

When the key fob 80 has not been authenticated by the vehicle 20 (S172: NO), the management server 70 advances the process to step S173.

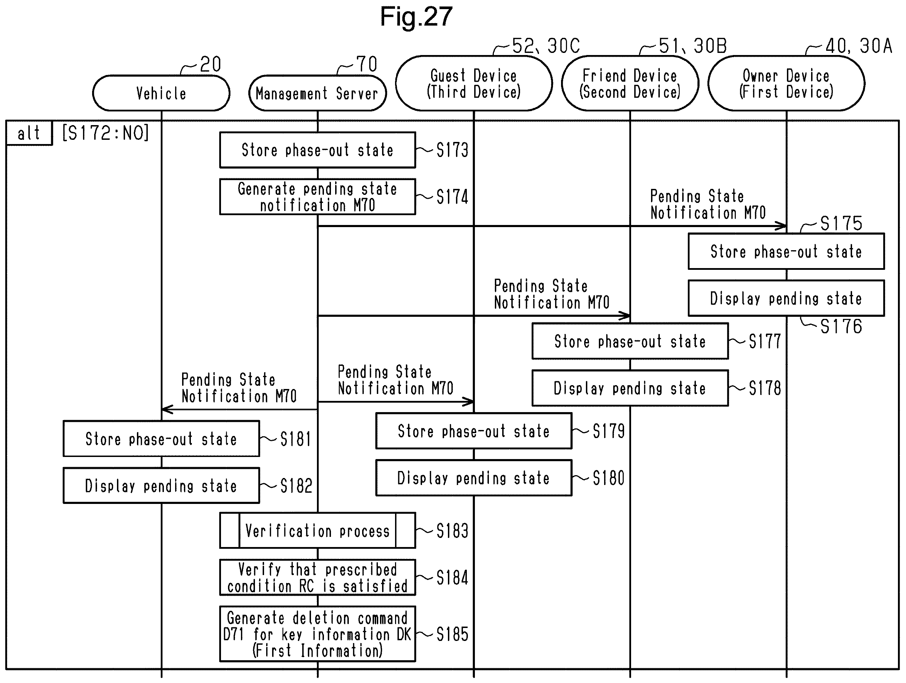

As shown in Fig. 27, in step S173, the management server 70 sets the state of the digital key that is the subject of the deletion operation to the phase-out state, in which the digital key will be deleted when the prescribed condition RC is satisfied. Thereafter, the management server 70 advances the process to step S174.

In step S174, the management server 70 generates a pending state notification M70. The pending state notification M70 is a notification indicating that the state of the digital key that is the subject of the deletion operation is set to a phase-out state, in which the digital key will be deleted when the prescribed condition RC is satisfied. The pending state notification M70 includes information related to a condition for exiting the phase-out state and completely deleting the digital key.

Thereafter, the management server 70 transmits the pending state notification M70 to the owner device 40 by controlling the communication module 73. The management server 70 transmits the pending state notification M70 to the friend devices 51 by controlling the communication module 73. Fig. 27 shows the second device 30B as a representative of the friend devices 51. The management server 70 transmits the pending state notification M70 to the guest devices 52 by controlling the communication module 73. Fig. 27 shows the third device 30C as a representative of the guest devices 52. The management server 70 transmits the pending state notification M70 to the vehicles 20 by controlling the communication module 73.

Upon receiving the pending state notification M70, the owner device 40 executes the process of step S175. In step S175, the owner device 40 stores information indicating that digital keys are in the phase-out state. Thereafter, the owner device 40 advances the process to step S176.

In step S176, the owner device 40 displays a notification image IM indicating that the digital keys are in the phase-out state on the display of HMI 32. Step S176 is identical to step S84 in the first embodiment, so detailed description will be omitted.

Upon receiving the pending state notification M70, the friend device 51 executes the process of step S177. In step S177, the friend device 51 stores information indicating that the digital keys are in the phase-out state. Thereafter, the friend device 51 advances the process to step S178. In step S178, the friend device 51 displays a notification image IM indicating that the digital keys are in the phase-out state on the display of HMI 32.

Upon receiving the pending state notification M70, the guest device 52 executes the process of step S179. In step S179, the guest device 52 stores information indicating that digital keys are in the phase-out state. Thereafter, the guest device 52 advances the process to step S180. In step S180, the guest device 52 displays the notification image IM indicating that the digital keys are in the phase-out state on the display of the HMI 32.

Upon receiving the pending state notification M70, the vehicles 20 executes the process of step S181. In step S181, the vehicle 20 stores information indicating that the digital keys are in the phase-out state. Thereafter, the vehicle 20 advances the process to step S182. In step S182, the vehicle 20 displays the notification image IM indicating that the digital keys are in the phase-out state on the display of the HMI 22.

After transmitting the pending state notification M70, the management server 70 executes the process of step S183. In step S183, the management server 70 executes a verification process. Step S183 is the same as step S92 of the first embodiment, and thus will not be described in detail. The communication module 73 acquires, from the vehicle 20, information indicating whether the key fob 80 has been authenticated by the vehicle 20. The communication module 73 acquires information indicating whether a new digital key has been registered to the vehicle 20.

The management server 70 determines whether the key fob 80 has been authenticated by the vehicle 20 based on the information indicating whether the key fob 80 has been authenticated, which has been received from the vehicle 20. The management server 70 determines whether a new digital key has been registered to the vehicle 20 based on information indicating whether a new digital key has been registered to the vehicle 20. After executing the process of step S183, the management server 70 advances the process to step S184.

In step S184, the management server 70 verifies that the prescribed condition RC is satisfied. When the key fob 80 is authenticated by the vehicle 20, the management server 70 determines that the prescribed condition RC is satisfied. The management server 70 also determines that the prescribed condition RC is satisfied when a new digital key is registered to the vehicle 20. When the prescribed condition RC is satisfied, the management server 70 advances the process to step S185.

In step S185, the management server 70 generates a deletion command D71 for instructing execution of deletion of the key information DK indicating the digital key that is the subject of the deletion request D70.

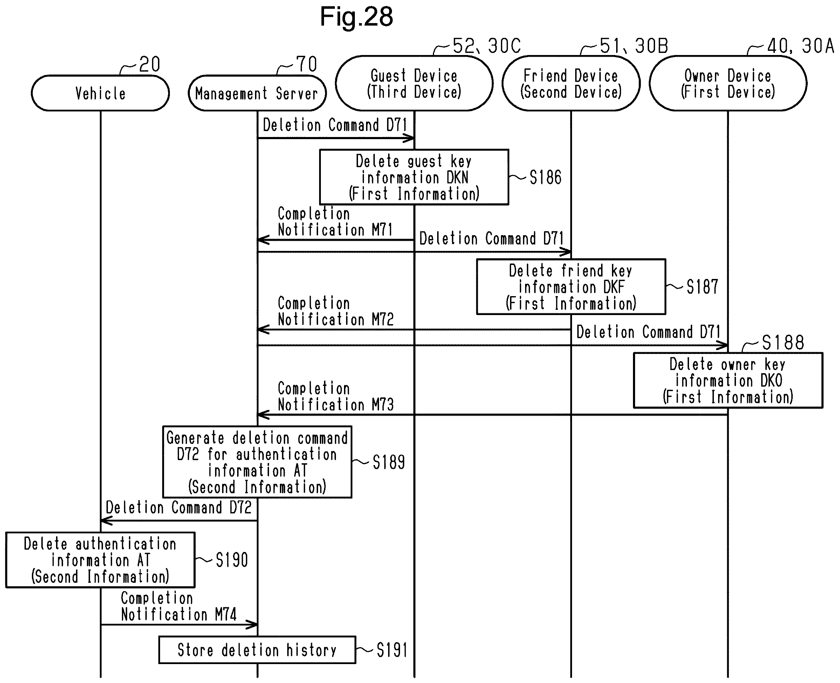

As shown in Fig. 28, after executing the process of step S185, the management server 70 transmits the deletion command D61 to the devices 30 that store the key information DK indicating the digital key that is the subject of the deletion request D70. Specifically, the management server 70 transmits the deletion command D71 to the first device 30A, the second device 30B, and the third device 30C.

Upon receiving the deletion command D71, the third device 30C executes the process of step S186. In step S186, the third device 30C deletes the guest key information DKN in accordance with the deletion command D71. Then, the third device 30C transmits, to the management server 70, a completion notification M71 indicating that the deletion in accordance with the deletion command D71 has been completed.

Upon receiving the deletion command D71, the second device 30B executes the process of step S187. In step S187, the second device 30B deletes the friend key information DKF in accordance with the deletion command D71. Then, the second device 30B transmits, to the management server 70, a completion notification M72 indicating that the deletion in accordance with the deletion command D71 has been completed.

Upon receiving the deletion command D71, the first device 30A executes the process of step S188. In step S188, the first device 30A deletes the owner key information DKO in accordance with the deletion command D71. Then, the first device 30A transmits, to the management server 70, a completion notification M73 indicating that the deletion in accordance with the deletion command D71 has been completed.

After receiving the completion notifications from all the devices 30 to which the deletion command D61 was transmitted, the management server 70 executes the process of step S189. In step S189, the management server 70 generates a deletion command D72 for instructing execution of deletion of the authentication information AT of the digital key that is the subject of the deletion request D70. Thereafter, the management server 70 transmits the deletion command D72 to the vehicle 20.

Upon receiving the deletion command D72, the vehicle 20 executes the process of step S190. In step S190, the vehicle 20 deletes all the authentication information AT of the digital key set to the phase-out state from the authentication information AT of the digital keys stored in the storage device 28. Thereafter, the vehicle 20 transmits, to the management server 70, a deletion completion notification M74 indicating that the deletion in accordance with the deletion command D72 has been completed.

Upon receiving the completion notification M74, the management server 70 executes the process of step S191. The process of step S191 is the same as the process of step S153 in the second embodiment, and thus will not be described.

### Case in which Step S172 is YES

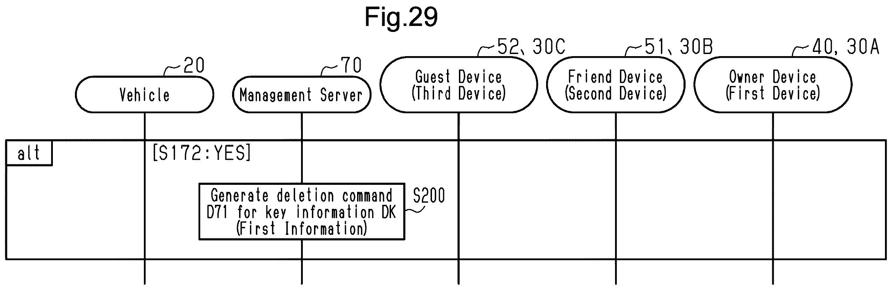

In step S172 shown in Fig. 26, if the key fob 80 has been authenticated by the vehicle 20 (step S172: YES), the vehicle 20 advances the process step S200 shown in Fig. 29.

In step S200, the management server 70 generates a deletion command D71 for instructing execution of deletion of the key information DK indicating the digital key that is the subject of the deletion request D70. Thereafter, the management server 70 advances the process to a series of processes illustrated in Fig. 28.

### Operation of the Third Embodiment

When receiving the deletion request D70, the management server 70 sets the state of the digital key that is the subject of the deletion request D70 to the phase-out state, and then deletes the information related to the digital key when the prescribed condition RC is satisfied. Accordingly, until the prescribed condition RC is satisfied, the device 30, storing the key information DK functions as a digital key. In the present embodiment, the key information DK is first information related to digital keys. That is, each of the guest key information DKN, the friend key information DKF, and the owner key information DKO is an example of the first information. In the present embodiment, the authentication information AT is second information related to the digital key.

### Advantages of the Third Embodiment

The third embodiment provides the following advantages in addition to advantage (2-2) through (2-4) of the second embodiment.

(3-1) When the communication module 73 receives the deletion request D70, the execution device 71 sets the state of the digital key that is the subject of the deletion request D70 to the phase-out state. In addition, when the prescribed condition RC is satisfied, the execution device 71 deletes the digital key that is the subject of the deletion request D70. Therefore, since the digital key is not deleted until the prescribed condition RC is satisfied, the device 30 owned by the user can be used as a digital key. This reduces the likelihood that the user will experience discomfort due to the user's device 30 suddenly becoming unusable as a digital key.

(3-2) When the prescribed deletion operation for deleting all the digital keys registered to the vehicle 20 is performed, the execution device 71 sets the state of the digital keys that are subject to the deletion operation to the phase-out state. Once all the digital keys set to the phase-out state are deleted, the vehicle 20 can no longer be used with the devices 30 that were registered as digital keys. In this regard, according to the management server 70, the digital key is not deleted until the prescribed condition RC is satisfied. Accordingly, all the digital keys registered to the vehicle 20 can be used until the prescribed condition RC is satisfied. This reduces the likelihood that the user will experience discomfort due to all digital keys registered to the vehicle 20 suddenly becoming unusable.

(3-3) If the key fob 80 is authenticated by the vehicle 20, the vehicle 20 can be operated by the key fob 80 even if the digital keys registered to the vehicle 20 are deleted. When the digital keys registered to the vehicle 20 are deleted in a state in which the key fob 80 is not authenticated by the vehicle 20, it is necessary to authenticate the key fob 80 by the vehicle 20 in order to operate the vehicle 20. When receiving the deletion request D70 in a state in which the key fob 80 has not been authenticated by the vehicle 20, the execution device 71 sets the state of the digital key that is the subject of the deletion operation to the phase-out state. This reduces the likelihood that digital keys registered to the vehicle 20 will suddenly become unusable while the key fob 80, which serves as an alternative to the digital keys, is not authenticated by the vehicle 20.

(3-4) When the key fob 80 is authenticated by the vehicle 20, the vehicle 20 can be operated by the key fob 80 even if the digital keys are deleted. When the key fob 80 is authenticated by the vehicle 20, the execution device 27 determines that the prescribed condition RC is satisfied. This reduces the likelihood that digital keys registered to the vehicle 20 will suddenly become unusable in a situation in which the key fob 80, serving as an alternative to the digital keys, cannot be authenticated by the vehicle 20.

(3-5) When a new digital key is registered to the vehicle 20, the vehicle 20 can be operated with the new digital key even if a digital key registered before registration of the new digital key is deleted. When a new digital key is registered to the vehicle 20, the execution device 71 determines that the prescribed condition RC is satisfied. This reduces the likelihood that digital keys registered to the vehicle 20 will suddenly become unusable in a situation in which no new digital key has been registered to the vehicle 20.

(3-6) The pending state notification M70 includes information related to a condition for completely deleting the digital key from the phase-out state. Accordingly, the vehicle 20 and the device 30 can include an image indicating a condition for completely deleting the digital key in the notification image IM displayed when the pending state notification M70 is received.

### Modifications of the Third Embodiment

The third embodiments may be modified as follows.

The management server 70 may execute the process of step S172 when receiving, from a source other than the vehicle 20, a deletion operation for deleting all the digital keys registered to the vehicle 20.

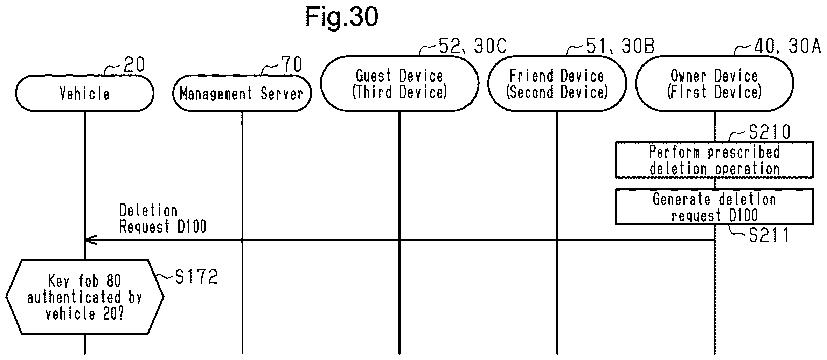

As shown in Fig. 30, in step S210, a prescribed deletion operation is performed in the owner device 40. Thereafter, the owner device 40 advances the process to step S211. In step S211, the owner device 40 generates a deletion request D100 and transmits the deletion request D90 to the management server 70. The deletion request D90 is a request to delete all the digital keys registered to the vehicle 20. When receiving the deletion request D100, the management server 70 advances the process to step S172. The subsequent processes are identical to the processes from step S172 onward in the second embodiment, so detailed description will be omitted. In this manner, even when the deletion request D100 is received from the owner device 40, the execution device 71 is configured to set the state of the digital key to the phase-out state and to delete the digital key when the prescribed condition RC is satisfied.

### Other Modifications

The above-described embodiments may be modified as described below. Each of the above embodiments and the following modifications can be combined as long as the combined modifications remain technically consistent with each other.

### Management System 10

The vehicle 20 may lack at least one of the BLE module 23, the UWB module 24, and the NFC module 25. The vehicle 20 is capable of performing short-range wireless communication with the device 30 as long as the vehicle 20 includes at least one of these modules. The vehicle 20 may include modules other than those listed above, provided that the module is capable of performing short-range wireless communication with the device 30.

The vehicle 20 does not necessarily need to be operable through authentication of the key fob 80.

Among multiple ECUs of the vehicle 20, an ECU other than the vehicle management device 26 may authenticate digital keys.

The digital key-related aspects in the above-described embodiments need not conform to the CCC standard.

The vehicle management device 26 is not limited to the digital key ECU. The vehicle management device 26 may be, for example, a central ECU that integrally manages multiple ECUs included in the vehicle 20.

In each of the above-described embodiments, the vehicle management device 26 is provided with the execution device 27, which is processing circuitry including one or more processors that run computer programs (software) to execute various processes. However, the execution device 27 may be processing circuitry including one or more dedicated hardware circuits, such as application-specific integrated circuits (ASICs) that execute at least some of the processes. Alternatively, the execution device 27 may be processing circuitry including a combination of one or more processors and one or more dedicated hardware circuits. The processor includes a CPU and a memory such as RAM or ROM. The memory stores program codes or commands configured to cause the CPU to execute processes. The memory, namely, a computer-readable medium, includes any available medium that is accessible by a general-purpose or special-purpose computer. The same applies to the execution devices 36 of the devices 30 and the execution device 71 of the management server 70.

The devices 30 are not limited to smartphones. The devices 30 may be smartwatches. The devices 30 may be specified servers. In this case, the devices 30 may be included in a specified server. For example, when a vehicle rental service provider or a vehicle sharing service provider is the owner of the vehicle 20, the owner device 40 may be included in a prescribed server. Further, for example, the friend device 51 may be included in the specified server.

In each of the above-described embodiments, the digital keys are arranged in a hierarchy consisting of, in descending order, the owner key KO, the friend key KF, and the guest key KN, such that digital keys at higher hierarchical levels are assigned greater authority. However, the digital keys do not necessarily need to be configured such that higher hierarchical levels correspond to greater authority. For example, equal authority may be assigned to the three hierarchical levels: the owner key KO, the friend key KF, and the guest key KN.

The shareable device 50 has a function of receiving the shareable key KS as in the above-described embodiment. A device 30 that is capable of receiving a digital key, such as a shareable device 50, may be referred to as a receiver device.

A separate device server 60 does not necessarily need to be provided for each type of device 30. It is sufficient that the multiple devices 30 and the management server 70 wirelessly communicate with each other. The device server 60 may be omitted from the management system 10. In this case, in the management system 10, it is sufficient that the multiple devices 30 and the management server 70 communicate directly via wireless communication.

The management server 70 may include multiple servers. For example, the management server 70 may include a server that stores the database DB and a server that executes a server program PS. In addition, for example, the management server 70 may include a server that communicates with the vehicles 20 and a server that communicates with the device server 60, and these servers may communicate with each other.

The management server 70 does not necessarily need to store the database DB. It is sufficient that the management server 70 manage at least a combination of the key information DK of the device 30 and the authentication information AT of the vehicle management device 26 for one digital key in the management system 10.

When a digital key is deleted, the digital key shifts from an enabled state to a disabled state. In each of the above embodiments, a digital key is disabled when at least one of its corresponding authentication information AT and corresponding key information DK is deleted.

Accordingly, deleting a digital key corresponds to deleting at least one of the key authentication information AT related to the digital key stored in the vehicle management device 26, and the key information DK related to the digital key stored in the device 30. When deleting both the authentication information AT and the key information DK, the digital key is deleted at a time point at which one of the authentication information AT or the key information DK is deleted first.

### Various Types of Information

The information related to the digital keys stored in the vehicle management device 26 is not limited to the authentication information AT, and may be any information related to the digital key. For example, the information related to digital keys may be information used to identify the digital keys.

The information related to the digital keys stored in the device 30 is not limited to the key information DK, and may be any information related to the digital key. For example, the information related to digital keys may be information used to identify the digital keys.

The information related to the digital key stored in the vehicle management device 26 may be different from the information related to the digital key stored in the device 30 as in the above-described embodiment, or may be the same.

The authentication information AT is not limited to the examples of the above-described embodiments as long as it is information for authenticating digital keys when digital keys are used. For example, the authentication information AT may be a common key shared by the vehicle management device 26 and the device 30. For example, the authentication information AT may be a common key shared by the vehicle management device 26 and the device 30.

The configuration of the information included in the key information DK is not limited to the example of the above-described embodiment. For example, the owner key information DKO does not necessarily need to include the slot identification information ST4. In another example, the key information DK may include information indicating the type of digital key. The information indicating the type of digital key includes, for example, information indicating one of the owner key KO, the friend key KF, and the guest key KN.

The management system 10 may include information indicating the types of the devices 30 in the database DB. The information indicating type of the devices 30 is, for example, information indicating any one of smartphone, smartwatch, the prescribed server as in the above described modification, and the like.

The structure of the data DA in the database DB is not limited to the examples of the above-described embodiments. The database DB may be modified as long as it includes information necessary for the management server 70 to perform management in the management system 10.

In the database DB, the authority does not necessarily need to be uniformly determined in accordance with the type of digital key, and may be set for each digital key. In the database DB, the authority of the digital key does not necessarily need to be defined.

### Series of Processes for Registering Digital Keys

The series of processes for registering the owner key KO is not limited to the examples in the above-described embodiments. For example, even if pairing through the process of step S12 is not performed, the owner device 40 may store the owner key information DKO by transmitting and receiving information such as the generation data DC between the vehicle 20 and the first device 30A via the management server 70. The series of processes for registering the owner key KO may be appropriately modified to align with the structure of the information included in the owner key information DKO and the structure of the information included in the authentication information AT.

The series of processes for registering the friend keys KF is not limited to the example in each of the above-described embodiments. For example, the management server 70 may update the database DB through the process of step S29 after transmitting the authentication package ATP and the storage request D24 to the vehicle 20. The series of processes for registering the friend key KF may be appropriately modified to align with the structure of the information included in the friend key information DKF and the structure of the information included in the authentication information AT.

The series of processes for registering the guest keys KN is not limited to the example in each of the above-described embodiments. The order of the processes for registering the guest key KN may be different from the order of the processes for registering the friend key KF. The series of processes for registering the guest key KN may be appropriately modified to align with the structure of the information included in the guest key information DKN and the structure of the information included in the authentication information AT.

The types of digital keys do not necessarily need to include the guest keys KN. In other words, in the management system 10, the shareable key KS may be only the friend key KF. In this case, the subject digital key may be the owner key KO, and the digital key registered based on the subject digital key may be the friend key KF.

The guest device 52 may be able to transmit a request to register a new guest key KN. In other words, the shareable device 50 may transmit a request to register a new guest key KN regardless of whether the shareable device 50 is the friend device 51 or the guest device 52.

### Series of Processes Executed When Deletion Operation Is Received

When a new digital key is registered to the vehicle 20, some of the digital keys need not be deleted so that use of the new digital key can be continued. For example, when the new digital key is registered based on a registration request from the eighth device 30H, a digital key in a direct lineage with the new digital key does not need to be deleted. In this case, for example, in the first embodiment, the vehicle 20 does not need to delete the first digital key DK1, the second digital key DK2, the third digital key DK3, and the eighth digital key DK8.

In the first embodiment, when a deletion operation is performed in a state in which the key fob 80 has been authenticated by the vehicle 20, the vehicle 20 may set the state of the digital key that is the subject of the deletion operation to the phase-out state. In the second embodiment, when a deletion operation is performed in a state in which the key fob 80 has been authenticated by the vehicle 20, the vehicle 20 may transmit the deletion request D60 to the management server 70. In the third embodiment, when receiving the deletion request D70 in a state in which the key fob 80 has been authenticated by the vehicle 20, the management server 70 may set the state of the digital key that is the subject of the deletion request D70 to the phase-out state.

The deletion operation may be an operation for deleting some of the digital keys registered to the vehicle 20. In this case, for example, in the first embodiment, the vehicle 20 does not need to delete the authentication information AT of digital keys that are not deletion targets, and the vehicle 20 may generate a deletion request D51 for generating a deletion command D52 for deleting only the digital keys designated as deletion targets.

The prescribed condition RC is not limited to the example of the above-described embodiments. The prescribed condition RC does not need to include a case in which the vehicle 20 is authenticated by the key fob 80. The prescribed condition RC does not need to include a case in which a new digital key has been registered to the vehicle 20. The prescribed condition RC may include, for example, turning the vehicle 20 on again using a mechanical key.

The vehicle 20 does not need to display the pending state notification M50, the pending state notification M60, or the pending state notification M70 on the display of the HMI 22. The vehicle 20 does not need to include, in the notification image IM, an image indicating each pending notification, and the vehicle 20 does not need to display the notification image IM.

In each embodiment, the pending state notification M50, the pending state notification M60, and the pending state notification M70 do not need to include information related to the condition for terminating the phase-out state and completely deleting the digital keys.

In the first embodiment, the vehicle 20 does not need to transmit the pending state notification M50 to the owner device 40 or to the shareable devices 50.

In the second embodiment, the management server 70 does not need to transmit the pending state notification M70 to the vehicle 20. The management server 70 also does not need to transmit the pending state notification M70 to each device 30.

In the second embodiment, the vehicle 20 may transmit the pending state notification M70 to the owner device 40 or to the shareable devices 50. For example, the management server 70 may transmit the pending state notification M70 only to the vehicle 20, and thereafter the vehicle 20 may transmit the received pending state notification M70 to each device 30.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A vehicle (20) configured to communicate with multiple devices (30) each storing first information (DK) related to multiple digital keys, the devices (30) being registered as the digital keys in the vehicle (20), the vehicle (20) comprising:
a user interface (22) configured to receive an operation from a user of the vehicle (20);
a storage device (28) storing second information (AT) related to the digital keys; and
processing circuitry (27),
wherein the processing circuitry (27) is configured to, when receiving a deletion operation via the user interface (22) for deleting a digital key to be deleted that is at least one of the digital keys registered to the vehicle (20)
set a state of the digital key to be deleted to a phase-out state in which the digital key to be deleted is deleted when a prescribed condition (RC) is satisfied; and
delete the second information (AT) related to the digital key to be deleted from the storage device (28) when the prescribed condition (RC) is satisfied.

2. A vehicle (20) configured to communicate with a server (70) that manages multiple digital keys and with multiple devices (30) each storing first information (DK) related to the digital keys, the devices (30) being registered as the digital keys in the vehicle (20), the vehicle (20) comprising:
a user interface (22) configured to receive an operation from a user of the vehicle (20);
a storage device (28) storing second information (AT) related to the digital keys; and
processing circuitry (27),
wherein the processing circuitry (27) is configured to, when receiving a deletion operation via the user interface (22) for deleting a digital key to be deleted that is at least one of the digital keys registered to the vehicle (20)
transmit a deletion request (D60) to delete the digital key to be deleted to the server (70); and
delete the second information (AT) related to the digital key to be deleted from the storage device (28) when a prescribed condition (RC) is satisfied after receiving, from the server (70), a pending state notification (M60) indicating that a state of the digital key to be deleted has been set to a phase-out state in which the digital key to be deleted will be deleted when the prescribed condition (RC) is satisfied.

3. The vehicle (20) according to claim 1 or 2, wherein the deletion operation is an operation for deleting all the digital keys registered to the vehicle (20).

4. The vehicle (20) according to any one of claims 1 to 3, wherein
the vehicle (20) is also configured to be operable through authentication of a key fob (80), and
the processing circuitry (27) is configured to set the state of the digital key to be deleted to the phase-out state when receiving the deletion operation in a state in which the key fob (80) has not been authenticated by the vehicle (20).

5. The vehicle (20) according to any one of claims 1 to 4, wherein
the vehicle (20) is also configured to be operable through authentication of a key fob (80), and
the processing circuitry (27) is configured to determine that the prescribed condition (RC) is satisfied when the key fob (80) is authenticated by the vehicle (20).

6. The vehicle (20) according to any one of claims 1 to 5, wherein the processing circuitry (27) is configured to determine that the prescribed condition (RC) is satisfied when a new digital key is registered to the vehicle (20).

7. The vehicle (20) according to any one of claims 1 to 6, further comprising a display configured to display an image, wherein the processing circuitry (27) is configured to display, on the display, a pending state notification (M50) indicating that the state of the digital key to be deleted has been set to the phase-out state.

8. The vehicle (20) according to any one of claims 1 to 7, further comprising a communication module (21),
wherein the processing circuitry (27) is configured to control the communication module (21) to transmit, to an owner device (40) or to one of the multiple devices (30) that stores the first information (DK) related to the digital key to be deleted, a pending state notification (M50) indicating that the state of the digital key to be deleted has been set to the phase-out state.

9. The vehicle (20) according to claim 7 or 8, wherein the pending state notification (M50) includes information related to a condition for exiting the phase-out state and completely deleting the digital key.

10. A management server (70) configured to communicate with multiple devices (30) each storing first information (DK) related to multiple digital keys registered to a vehicle (20) and with the vehicle (20) storing second information (AT) related to the digital keys, and configured to manage the digital keys, the management server (70) comprising:
a communication module (73); and
processing circuitry (71),
wherein the processing circuitry (71) is configured to, when the communication module (73) receives, from the vehicle (20), a deletion request (D60) to delete a digital key to be deleted that is at least one of the digital keys registered to the vehicle (20)
set a state of the digital key to be deleted to a phase-out state in which the digital key to be deleted is deleted when a prescribed condition (RC) is satisfied; and
delete the digital key to be deleted when the prescribed condition (RC) is satisfied.

11. The management server (70) according to claim 10, wherein the deletion request (D60) is a request to delete all the digital keys registered to the vehicle (20).

12. The management server (70) according to claim 10 or 11, wherein
the vehicle (20) is also configured to be operable through authentication of a key fob (80), and
the communication module (73) is configured to acquire authentication determination information indicating whether the key fob (80) has been authenticated by the vehicle (20), and
the processing circuitry (71) is configured to set the state of the digital key to be deleted to the phase-out state when receiving the deletion request (D60) in a state in which the processing circuitry (71) determines that the key fob (80) has not been authenticated by the vehicle (20) based on the authentication determination information.

13. The management server (70) according to any one of claims 10 to 12, wherein
the vehicle (20) is also configured to be operable through authentication of a key fob (80), and
the communication module (73) is configured to acquire authentication determination information indicating whether the key fob (80) has been authenticated by the vehicle (20), and
the processing circuitry (71) is configured to determine that the prescribed condition (RC) is satisfied when determining that the key fob (80) is authenticated by the vehicle (20) based on the authentication determination information.

14. The management server (70) according to any one of claims 10 to 13, wherein
the communication module (73) is configured to acquire registration determination information indicating whether a new digital key has been registered to the vehicle (20); and
the processing circuitry (71) is configured to determine that the prescribed condition (RC) is satisfied when determining that a new digital key has been registered to the vehicle (20) based on the registration determination information.

15. The management server (70) according to any one of claims 10 to 14, wherein the processing circuitry (71) is configured to control the communication module (73) to transmit a pending state notification (M60) indicating that the digital key to be deleted is in the phase-out state to the vehicle (20), to an owner device (40), or to one of the multiple devices (30) that stores the first information (DK) related to the digital key to be deleted.
